(19) **Europäisches Patentamt / European Patent Office / Office européen des brevets**

(11) **EP 4 004 597 B1**

(12) **FASCICULE DE BREVET EUROPEEN**

(45) Date de publication et mention de la délivrance du brevet:
**13.12.2023 Bulletin 2023/50**

(21) Numéro de dépôt: **20742272.6**

(22) Date de dépôt: **22.07.2020**

(51) Classification Internationale des Brevets (IPC):
**G01S 17/34** *(2020.01)* **G01S 17/58** *(2006.01)*
**G01S 17/931** *(2020.01)* **G01S 7/481** *(2006.01)*
**G01S 17/89** *(2020.01)* **G01S 7/4911** *(2020.01)*
**G01S 7/4913** *(2020.01)* **G01S 17/42** *(2006.01)*

(52) Classification Coopérative des Brevets (CPC):
**G01S 17/34; G01S 7/4812; G01S 7/4817; G01S 7/4818; G01S 7/4911; G01S 7/4913; G01S 17/42; G01S 17/58; G01S 17/89; G01S 17/931**

(86) Numéro de dépôt international:
**PCT/EP2020/070652**

(87) Numéro de publication internationale:
**WO 2021/018685 (04.02.2021 Gazette 2021/05)**

(54) **METHODE D'IMAGERIE PAR UN LIDAR COHERENT ET LIDAR ASSOCIE**

VERFAHREN FÜR KOHÄRENTE LIDAR-BILDGEBUNG UND ZUGEHÖRIGER LIDAR

COHERENT LIDAR IMAGING METHOD AND ASSOCIATED LIDAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2019 FR 1908605**

(43) Date de publication de la demande:
**01.06.2022 Bulletin 2022/22**

(73) Titulaire: **THALES**
**92190 Meudon (FR)**

(72) Inventeurs:
• **FENEYROU, Patrick**
  **91767 Palaiseau Cedex (FR)**
• **MARTIN, Aude**
  **91767 Palaiseau Cedex (FR)**
• **BOURDERIONNET, Jérôme**
  **91767 Palaiseau Cedex (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-2018/036946     FR-A1- 3 034 189**
**US-A1- 2019 025 431**

• HULME J C ET AL: "Fully integrated hybrid silicon free-space beam steering source with 32-channel phased array", PROCEEDINGS OF SPIE/ IS & T,, vol. 8989, 8 mars 2014 (2014-03-08), pages 898907-898907, XP060035951, DOI: 10.1117/12.2044820 ISBN: 978-1-62841-730-2 cité dans la demande
• AMZAJERDIAN FARZIN ET AL: "Lidar systems for precision navigation and safe landing on planetary bodies", INTERNATIONAL SYMPOSIUM ON PHOTOELECTRONIC DETECTION AND IMAGING 2011: LASER SENSING AND IMAGING; AND BIOLOGICAL AND MEDICAL APPLICATIONS OF PHOTONICS SENSING AND IMAGING, SPIE, 1000 20TH ST. BELLINGHAM WA 98225-6705 USA, vol. 8192, no. 1, 9 juin 2011 (2011-06-09) , pages 1-7, XP060016360, DOI: 10.1117/12.904062 cité dans la demande

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 004 597 B1

**Description**

**DOMAINE DE L'INVENTION**

L'invention concerne le domaine des lidars cohérents à modulation de fréquence et plus particulièrement la réalisation de lidar cohérent pour effectuer de l'imagerie 3D. Ce type d'imagerie peut par exemple être utilisée dans le cadre des véhicules autonomes (train, voitures...) ou pour le contrôle non destructif par mesure 3D de la géométrie d'une pièce.

**ETAT DE LA TECHNIQUE**

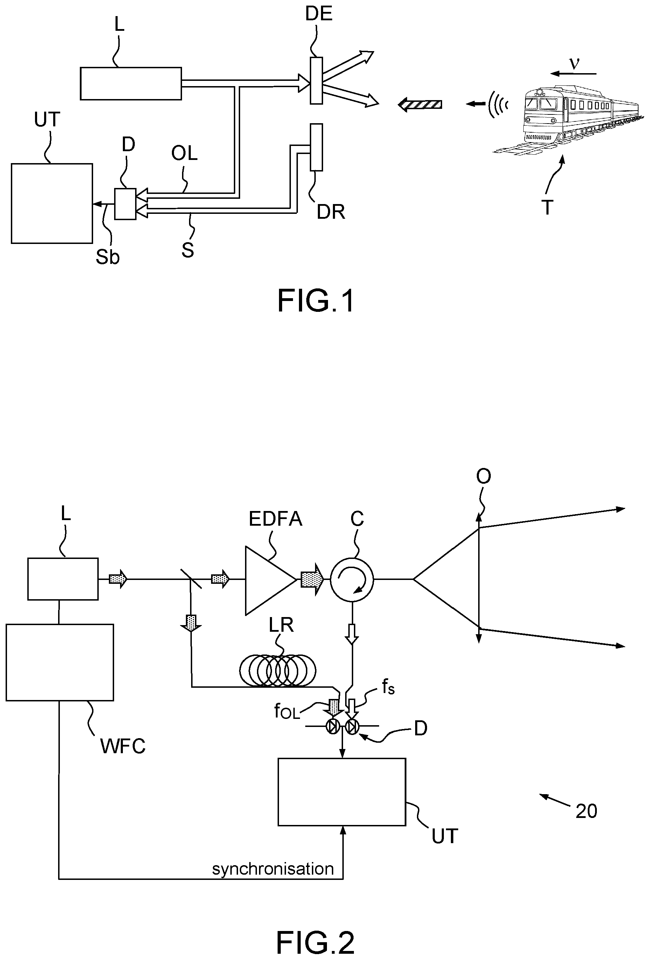

Le principe d'un lidar cohérent est bien connu de l'état de la technique et illustré figure 1. Un lidar cohérent comprend une source cohérente L, typiquement un laser qui émet une onde lumineuse cohérente (domaine IR, visible ou UV proche), un dispositif d'émission DE qui permet d'illuminer un volume de l'espace, et un dispositif de réception DR, qui collecte une fraction de l'onde lumineuse rétrodiffusée par une cible T. Le décalage de fréquence Doppler $\nu_{Dop}$ de l'onde rétrodiffusée est fonction de la vitesse radiale v de la cible T.

A la réception on effectue un mélange entre l'onde lumineuse rétrodiffusée S reçue de fréquence fs et une partie de l'onde émise dénommée onde OL pour « oscillateur local ». L'interférence de ces deux ondes est détectée par un photodétecteur D, et le signal électrique en sortie du détecteur présente un terme oscillant dénommé signal de battement Sb, en plus des termes proportionnels à la puissance reçue et à la puissance d'oscillateur local. Une unité de traitement UT numérise ce signal et en extrait l'information de vitesse v de la cible T.

Préférentiellement l'unité de traitement filtre électroniquement le signal de battement Sb dans une bande étroite centrée sur la fréquence nulle, en l'absence de décalage de fréquence (voir plus loin).

Pour les lidars cohérents, les dispositifs d'émission et de réception utilisent préférentiellement une même optique (lidar monostatique). Cette caractéristique permet d'obtenir une bonne stabilité mécanique et de réduire l'influence des turbulences atmosphériques à longue distance, les trajets de propagation des ondes incidente et rétrodiffusée étant confondus.

Une solution pour la télémétrie/vélocimétrie par lidar consiste à réaliser un système à modulation de fréquence. Cette technique, classique en radar, trouve un intérêt particulier actuellement compte tenu des progrès des sources lasers fibrées. Grâce à la modulation de fréquence, une analyse temps/fréquence permet de remonter à la distance d de la cible et à sa vitesse v. Ce type de lidar permet également de réaliser une fonction d'anémométrie laser.

Un exemple d'architecture optique d'un lidar à modulation de fréquence 20 est décrit figure 2. La source cohérente est modulée en fréquence de manière à ce que la fréquence de l'oscillateur local soit modulée selon une fonction prédéterminée dénommée forme d'onde dont le contrôle est assuré par le module WFC, synchronisé avec l'unité de traitement UT.

Le signal optique à l'émission est amplifié par un amplificateur EDFA, l'émission et la réception utilisent une même optique O et sont séparées à l'aide d'un circulateur C.

Ce signal optique peut éventuellement être décalé en fréquence, par exemple à l'aide d'un modulateur acousto-optique qui est préférentiellement positionné avant l'amplificateur EDFA mais peut également être positionné sur le trajet de l'oscillateur local. Dans ce cas le filtrage électronique dans l'unité de traitement est effectué autour de la fréquence de décalage. Une ligne à retard LR permet d'égaliser les chemins optiques de l'oscillateur local et du signal d'émission de manière à filtrer, dans le domaine RF, les défauts des composants optiques placés après l'amplificateur EDFA (défaut de cross-talk du circulateur C, imperfections des traitements anti-reflet de l'optique O d'émission/réception ,...). Préférentiellement le détecteur D est équilibré ou « balancé » tel qu'illustré figure 2.

Un exemple d'un lidar cohérent à modulation de fréquence est décrit dans le document « Lidar systems for précision navigation and safe landing on planetary bodies » Farzin Amzajerdian et al, Proc. SPIE 8192, International Symposium on Photoelectronic Détection and Imaging 2011: Laser Sensing and Imaging; and Biological and Medical Applications of Photonics Sensing and Imaging, 819202 (August 19, 2011). La figure 3 décrit le principe de fonctionnement de ce lidar. Le document US2019/025431 A1 décrit un Lidar cohérent utilisant une forme d'onde générée par deux sources laser et permettant de mesurer la vitesse et la distance pour un pixel.

On se place dans la description ci-dessous dans le cas où la fréquence optique d'émission et celle de l'oscillateur local ne sont pas décalées à l'aide d'un modulateur acousto-optique. La fréquence de l'oscillateur local $f_{OL}$ est modulée linéairement selon deux pentes de fréquence $\alpha_1$ et $\alpha_2$ de manière périodique de période $T_{FO}$. Cette fréquence optique $f_{OL}$ peut s'écrire comme la somme d'une fréquence optique f0 constante (ici la fréquence initiale du laser) et d'une fréquence de modulation dans le domaine radiofréquence dépendante du temps $f_{mod}(t)$ issue de la modulation de la source laser :

$$f_{OL}(t) = f0 + f_{modOL}(t)$$

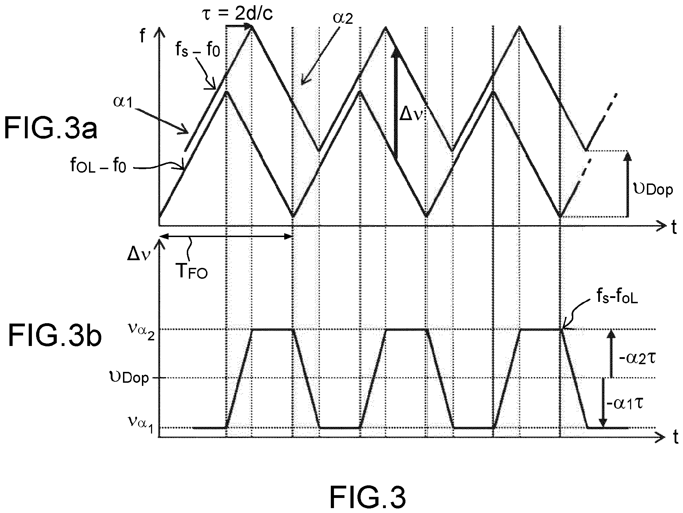

La figure 3 illustre la variation au cours du temps des fréquences $f_{OL}(t)$ et $f_s(t)$, la fréquence optique f0 ayant été soustraite pour plus de clarté. Comme illustré sur la figure 3a, le signal rétrodiffusé de fréquence fs(t) est décalé temporellement d'un temps $\tau$ du fait de la propagation jusqu'à la zone de mesure (cible T) et donc relié à la distance d de la cible, et est décalé en fréquence d'une valeur $\nu_{Dop}$ du fait de l'effet Doppler par rapport à la fréquence de l'oscillateur local $f_{OL}(t)$.

Le signal de battement détecté Sb présente une composante de fréquence $fs-f_{OL}$. La figure 3b illustre l'évolution au cours du temps de $fs - f_{OL}$. On constate que cette différence de fréquence comprend en fonction du temps deux séries de plateaux aux fréquences caractéristiques $\nu_{\alpha 1}$ et $\nu_{\alpha 2}$, directement reliées à la distance de la cible d et à sa vitesse v radiale par les équations (où $\lambda$ est la longueur d'onde de la source L et c la vitesse de la lumière) :

[Math 1]

$$\nu_{\alpha_1} = \frac{2\,\mathrm{v}}{\lambda} - \frac{2\alpha_1 d}{c}$$

[Math 2]

$$\nu_{\alpha_2} = \frac{2\,\mathrm{v}}{\lambda} - \frac{2\alpha_2 d}{c}$$

En mesurant ces deux fréquences caractéristiques $\nu_{\alpha 1}$ et $\nu_{\alpha 2}$ du signal de battement Sb, par exemple en réalisant une transformée de Fourier de celui-ci, on remonte à d et v. On réalise ici une mesure « monopixel ».

Les lidars cohérents à modulation de fréquence, communément dénommés selon l'acronyme lidar FMCW (pour « Frequency Modulated Continuous Wave » en anglais), présentent les avantages suivants :

une grande sensibilité conduisant à une portée accrue (par rapport à une détection directe),
une difficulté à être leurré/brouillé (compte tenu de l'émission/réception d'une forme d'onde précise et du filtrage spatial et spectral en réception)
une possibilité de mesurer simultanément et indépendamment la vitesse et la distance d'une cible
une dynamique de distance élevée (plus difficilement accessible avec les capteurs à comptage de photons, le temps d'intégration global ayant tendance à croître significativement pour des scènes complexes présentant différents plans répartis sur une large distance).

Cependant un inconvénient majeur provient indirectement de ces avantages : il est nécessaire d'accumuler le signal rétrodiffusé sur une ou plusieurs périodes de la forme d'onde ce qui conduit à une certaine lenteur pour les applications d'imagerie. En particulier, les systèmes cohérents monopixel (tel que décrit précédemment) à balayage mécanique ne permettent pas d'atteindre une cadence de rafraîchissement de l'image satisfaisante (typiquement environ $10^6$ pixels à 20 Hz).

Il n'existe, à notre connaissance, aucune architecture d'imagerie cohérente à modulation de fréquence, rapide et conçue pour des mesures à longue distance (plusieurs km). Quelques démonstrateurs de lidars cohérents à modulation de fréquence existent mais ils opèrent généralement assez lentement ou à courte distance. Plusieurs publications de laboratoire académiques font état d'une recherche sur ce type de lidars pour les applications de véhicules autonomes, la cadence d'images et la portée restant pour l'instant limitée.

Pour réaliser plusieurs pixels, l'homme de l'art pourrait penser à utiliser un multiplexage en longueur d'onde en disposant plusieurs lasers, chacun émettant à une longueur d'onde différente et dans une direction différente. Ceci peut être réalisé séquentiellement ou en parallèle.

L'architecture séquentielle a fait l'objet de plusieurs publications à courte portée (principalement pour des applications automobile) mais elle ne permet pas d'accroître significativement la cadence d'images.

L'implémentation parallèle consisterait à utiliser plusieurs lasers qui pourraient éventuellement partager le même amplificateur et seraient séparés à l'aide d'un démultiplexeur pour l'émission/réception. Une telle architecture nécessiterait cependant autant de détecteurs que de voies traitées en parallèle. Par ailleurs, les moyens de contrôle de forme d'onde et de traitement de signal seraient également multipliés.

Selon une autre option on utilise un laser accordable sur une très large gamme spectrale permettant de générer les pentes de fréquence et des sauts de fréquence supplémentaires. Cette option est par exemple décrite dans la publication « Fully integrated hybrid silicon free-space beam steering source with 32 channel phased array » Hulme et al, Proc. SPIE vol 8989, 898907-1, 2014. Ces sauts sont utilisés conjointement avec un réseau pour adresser différents pixels.

D'autres types d'architectures cohérentes ont été étudiées/commercialisées, parmi lesquelles (toujours en détection cohérente) une architecture à modulation de phase difficilement applicable à longue portée (entreprise Blackmore): la distance d'ambiguïté est calée sur le besoin automobile et ne peut être étendue à celle requise pour les trains autonomes par exemple, sans ralentir significativement l'acquisition d'image.

Un but de la présente invention est de remédier aux inconvénients précités en proposant un lidar d'imagerie 3D capable de fonctionner à cadence relativement élevée (dépendante du nombre de pixels dans l'image) et compatible d'un fonctionnement longue distance (supérieure au km).

## DESCRIPTION DE L'INVENTION

La présente invention a pour objet dans une première variante une méthode d'imagerie mise en oeuvre par un lidar cohérent, comprenant les étapes consistant à :

- A Générer un signal dénommé oscillateur local présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,
- B Générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,
- C Emettre chaque signal d'émission Si dans une direction associée, les directions étant choisies de manière à couvrir une portion d'espace prédéterminée correspondant au champ observé, chaque direction correspondant à un pixel Ai d'une image dudit champ,
- D Collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,
- E Détecter un signal de battement Sb généré à partir de l'interférence entre l'oscillateur local et les N signaux rétrodiffusés,
- F Moduler de manière complexe le signal de battement Sb par la fréquence de modulation de l'oscillateur local $f_{modOL}$,
- G Réaliser NxP démodulations complexes du signal de battement modulé, chaque démodulation complexe indicée i, j consistant à démoduler par une fréquence de démodulation $f_{demodi,j}$ présentant une pente unique égale à la pente $\alpha_{i,j}$, pour obtenir NxP signaux démodulés $S_{demodi,j}$,
- H Déterminer NxP densités spectrales de puissance $SP_{i,j}$ des NxP signaux démodulés $S_{demodi,j}$
- I Déterminer des fréquences caractéristiques correspondant à des maximas locaux des NxP densités spectrales de puissance,
- J Déterminer, pour chaque pixel Ai, au moins une information de vitesse et au moins une information de distance à partir des fréquences caractéristiques.

La présente invention a pour objet dans une deuxième variante une méthode d'imagerie mise en oeuvre par un lidar cohérent comprenant les étapes consistant à :

- A Générer un signal dénommé oscillateur local, présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,
- B Générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,
- C Emettre chaque signal d'émission Si dans une direction associée, les directions étant choisies de manière à couvrir une portion d'espace prédéterminée correspondant au champ observé, chaque direction correspondant à un pixel Ai d'une image dudit champ,
- D Collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,
- E' Détecter N signaux de battement sur N détecteurs, un signal de battement Sbi indicé i étant généré à partir de l'interférence entre l'oscillateur local et le signal rétrodiffusé indicé i,
- F' Moduler de manière complexe chaque signal de battement Sbi par la fréquence de modulation de l'oscillateur local $f_{modOL}$,

- G' Réaliser, pour chacun des N signaux de battement modulés indicés i, P démodulations complexes, chaque démodulation complexe indicée j d'un signal de battement modulé indicé i consistant à démoduler par une fréquence de démodulation $f_{demodi,j}$ présentant une pente unique égale à la pente $\alpha_{i,j}$, pour obtenir P signaux démodulés $S_{demodi,j}$,
- H Déterminer NxP densités spectrales de puissance $SP_{i,j}$ en effectuant, pour chaque i, P densités spectrales de puissance des P signaux démodulés,
- I Déterminer, pour chaque i, des fréquences caractéristiques ($\nu_{ij}$) correspondant à des maximas locaux des P densités spectrales de puissance,
- J Déterminer, pour chaque pixel Ai, au moins une information de vitesse et au moins une information de distance à partir des fréquences caractéristiques ($\nu_{ij}$).

Selon un mode de réalisation les pentes de fréquence $\alpha_{i,j}$ sont déterminées comme suit : $\alpha_{i,j} = r_i \cdot \alpha_{OLj}$ avec $r_i$ nombre réel. Préférentiellement les nombre réels $r_i$ ne sont pas des multiples entiers les uns des autres.

Selon un mode de réalisation la méthode comprend en outre une étape de balayage dans laquelle on met en oeuvre les étapes A à J successivement pour une pluralité de champs observés.

Selon un autre aspect l'invention concerne dans une première variante un lidar cohérent pour réaliser de l'imagerie comprenant:

- Une source laser configurée pour générer un signal dénommé oscillateur local présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,
- Un dispositif multiplexeur/modulateur configuré pour générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,
- Un dispositif d'émission configuré pour émettre chaque signal d'émission Si dans une direction associée, les directions étant choisies de manière à couvrir une portion d'espace prédéterminée correspondant au champ observé, chaque direction correspondant à un pixel Ai d'une image dudit champ,
- Un dispositif de réception configuré pour collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,
- Un photodétecteur configuré pour générer un signal de battement Sb généré à partir de l'interférence entre l'oscillateur local et les N signaux rétrodiffusés,
- Une unité de traitement configurée pour :

    - Moduler de manière complexe le signal de battement Sb par la fréquence de modulation de l'oscillateur local $f_{modOL}$,
    - Réaliser NxP démodulations complexes du signal de battement modulé, chaque démodulation complexe indicée i, j consistant à démoduler par une fréquence de démodulation $f_{demodi,j}$ présentant une pente unique égale à la pente $\alpha_{i,j}$ pour obtenir NxP signaux démodulés $S_{demodi,j}$ ,
    - Déterminer NxP densités spectrales de puissance $SP_{i,j}$ des NxP signaux démodulés $S_{demodi,j}$
    - Déterminer des fréquences caractéristiques correspondant à des maxima locaux des NxP densités spectrales de puissance,
    - Déterminer, pour chaque pixel Ai, au moins une information de vitesse et au moins une information de distance à partir des fréquences caractéristiques.

Selon une deuxième variante l'invention concerne un lidar cohérent pour réaliser de l'imagerie comprenant:

- Une source laser configurée pour générer un signal dénommé oscillateur local présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,
- Un dispositif multiplexeur/modulateur configuré pour générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,
- Un dispositif d'émission configuré pour émettre chaque signal d'émission Si dans une direction associée, les directions étant choisies de manière à couvrir une portion d'espace prédéterminée correspondant au champ observé, chaque direction correspondant à un pixel Ai d'une image dudit champ,

- Un dispositif de réception configuré pour collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,
- N photodétecteurs configurés pour générer respectivement N signaux de battement, chaque signal de battement Sbi indicé i étant généré à partir de l'interférence entre l'oscillateur local et le signal rétrodiffusé indicé i,
- Une unité de traitement configurée pour :

    - Moduler de manière complexe chaque signal de battement Si par la fréquence de modulation de l'oscillateur local $f_{modOL}$,
    - Réaliser, pour chacun des N signaux de battement modulé indicés i, P démodulations complexes, chaque démodulation complexe indicée j consistant à démoduler par une fréquence de démodulation $f_{demodi,j}$ présentant une pente unique égale à la pente $\alpha_{i,j}$ pour obtenir P signaux démodulés $S_{demodi,j}$,
    - Déterminer NxP densités spectrales de puissance $SP_{i,j}$ en effectuant pour chaque i, P densités spectrales de puissance des P signaux démodulés $S_{demodi,j}$
    - Déterminer pour chaque i des fréquences caractéristiques correspondant à des maximas locaux des P densités spectrales de puissance,
    - Déterminer, pour chaque pixel Ai, au moins une information de vitesse et au moins une information de distance à partir des fréquences caractéristiques.

Selon un mode de réalisation le dispositif modulateur/multiplexeur comprend une pluralité de modulateurs en phase et quadrature agencés en parallèle.

Selon un mode de réalisation le lidar selon l'invention comprend en outre un dispositif de balayage configuré pour générer successivement une pluralité d'ensembles de direction, de manière à couvrir une pluralité de champs

Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée décrit le principe d'un lidar cohérent.

[Fig 2] La figure 2 déjà citée décrit un exemple d'architecture optique d'un lidar à modulation de fréquence.

[Fig 3] La figure 3 illustre l'évolution au cours du temps de fréquences $f_{OL}(t)$-f0, $f_s(t)$-f0 et $f_s(t)$-f0. La figure 3a déjà citée illustre la variation au cours du temps des fréquences $f_{OL}(t)$-f0 et $f_s(t)$-f0 et la figure 3b déjà citée illustre l'évolution au cours du temps de fs -$f_{OL}$.

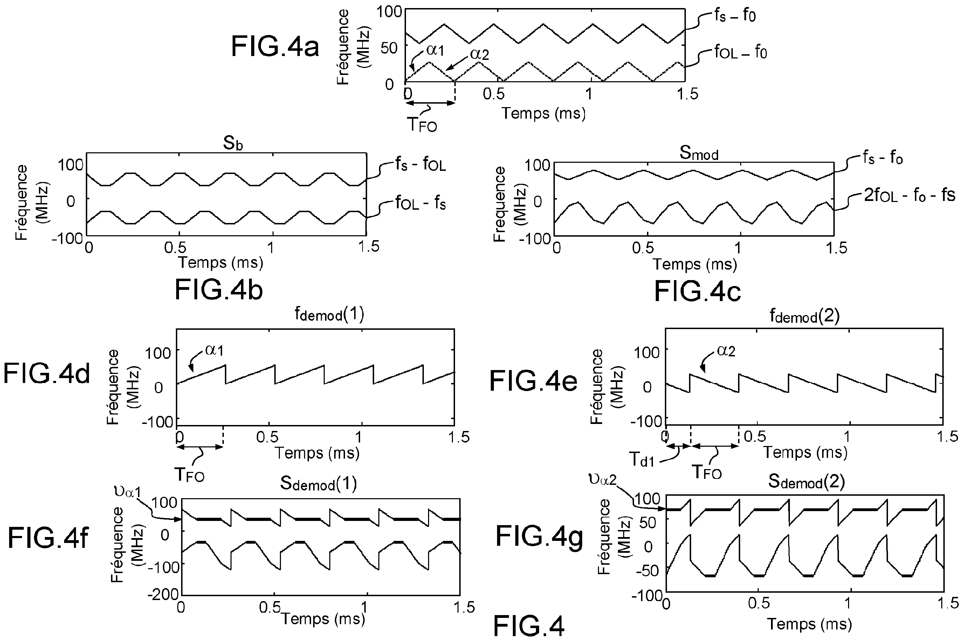

[Fig. 4] La figure 4 illustre la modulation/démodulation pour le cas d'une forme d'onde du signal $f_{modOL}$ comprenant 2 pentes $\alpha1$ et $\alpha2$. La figure 4a illustre la variation en fonction du temps de la fréquence de l'oscillateur local $f_{OL}(t)$ et de la fréquence signal fs(t). La figure 4b illustre les deux composantes fréquentielles du signal de battement lidar Sb : fs-fOL et fOL-fs. La figure 4c illustre la variation en fonction du temps de la fréquence du signal modulé obtenu $S_{mod}$. La figure 4d illustre la variation en fonction du temps de la fréquence de démodulation $f_{demod}(1)$ (pente $\alpha1$). La figure 4e illustre la variation en fonction du temps de la fréquence de démodulation $f_{demod}(2)$ (pente $\alpha2$). La figure 4f illustre la variation en fonction du temps de la fréquence du signal démodulé $S_{demod}(1)$ La figure 4g illustre la variation en fonction du temps de la fréquence du signal démodulé $S_{demod}(2)$.

[Fig 5a] La figure 5a illustre la densité spectrale SP(1) du spectre déterminé à partir du signal $S_{demod}(1)$.

[Fig 5b] La figure 5b illustre la densité spectrale SP(2) du spectre déterminé à partir du signal $S_{demod}(2)$.

[Fig 6] La figure 6 illustre une première variante de la méthode d'imagerie mise en oeuvre par un lidar cohérent selon l'invention.

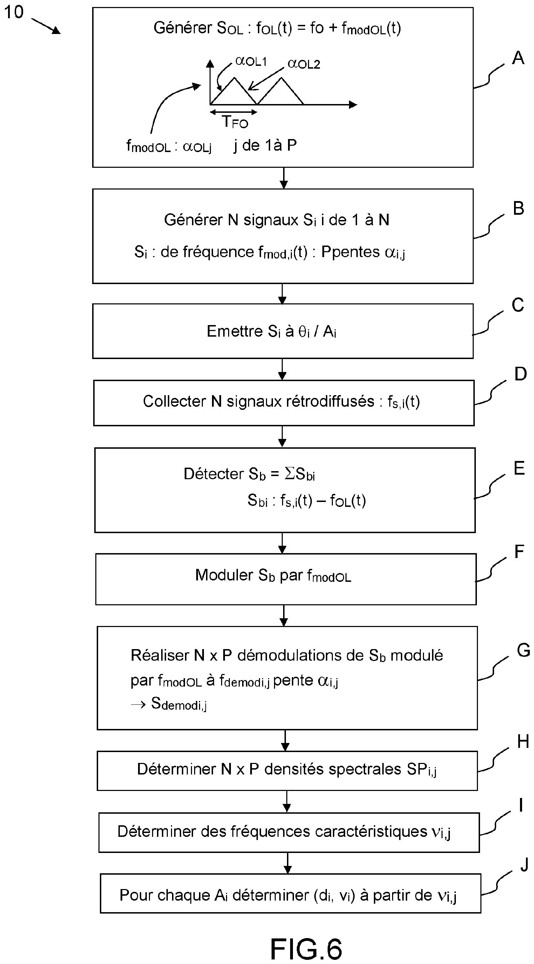

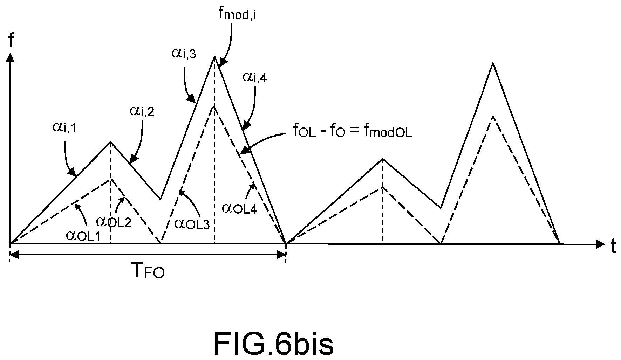

[Fig 6bis] La figure 6bis illustre un exemple d'une fréquence de modulation $f_{mod,i}$ présentant P pentes $\alpha_{i,j}$ synchronisées avec les P pentes de l'oscillateur local $\alpha_{OLj}$, pour le cas P=4.

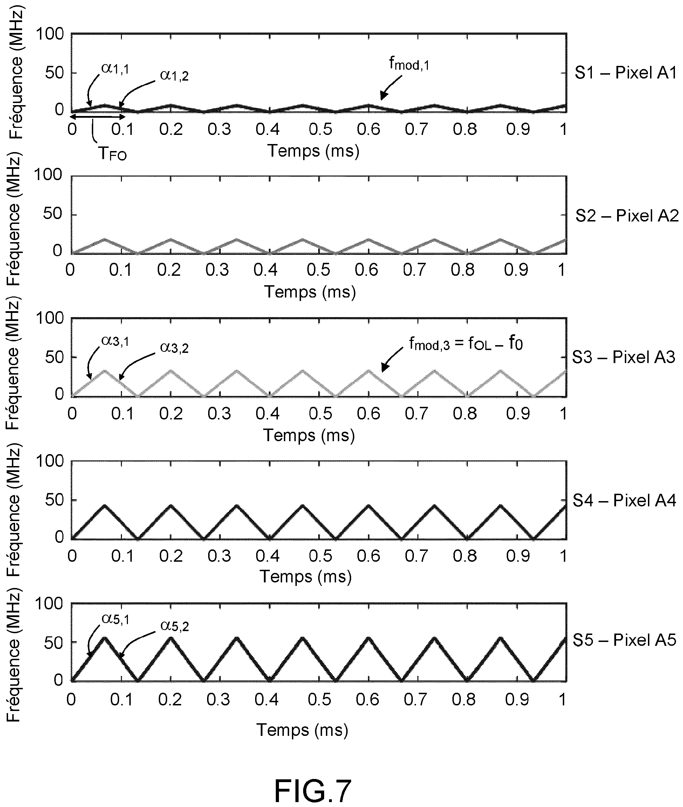

[Fig 7] La figure 7 illustre un exemple des fréquences de modulation de cinq signaux d'émission (N=5) et un oscillateur local à deux pentes $\alpha1$ et $\alpha2$ (P=2).

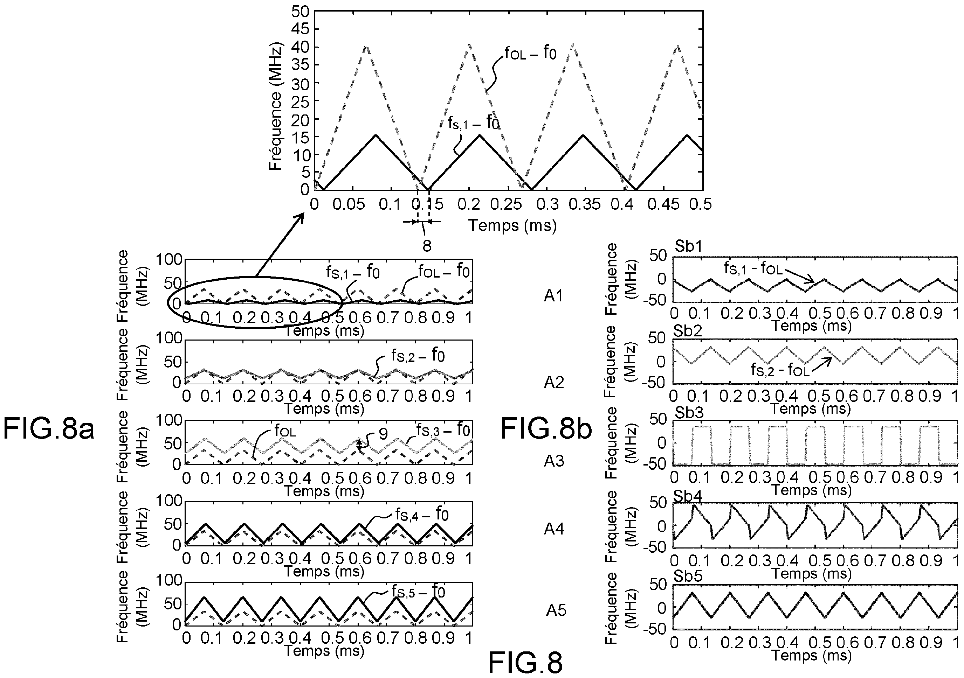

[Fig 8] La figure 8 décrit différentes fréquences d'intérêt pour 5 pixels A1 à A5 correspondant chacun à un élément du champ observé, présentant une distance et une vitesse différente et connue. La figure 8a montre l'évolution de la fréquence $f_{s,i}$ caractérisant le signal rétrodiffusé pour chaque pixel Ai. La figure 8b montre la fréquence instantanée du battement de cette rétrodiffusion avec l'oscillateur local.

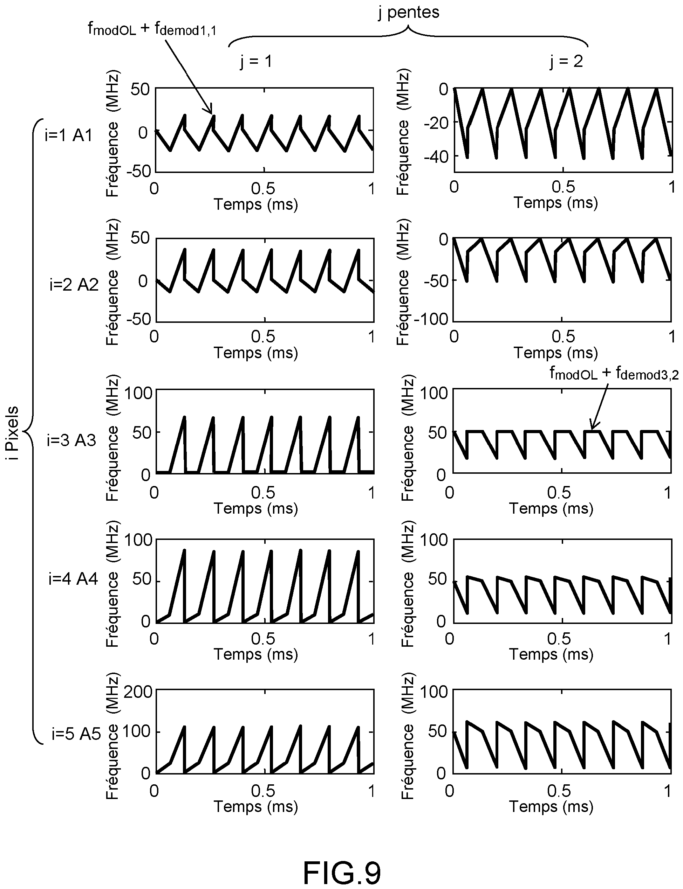

[Fig 9] La figure 9 illustre la fréquence résultant de la pré-modulation par la fréquence de l'oscillateur local et de l'étape de démodulation pour les 5x2 fonctions de démodulation.

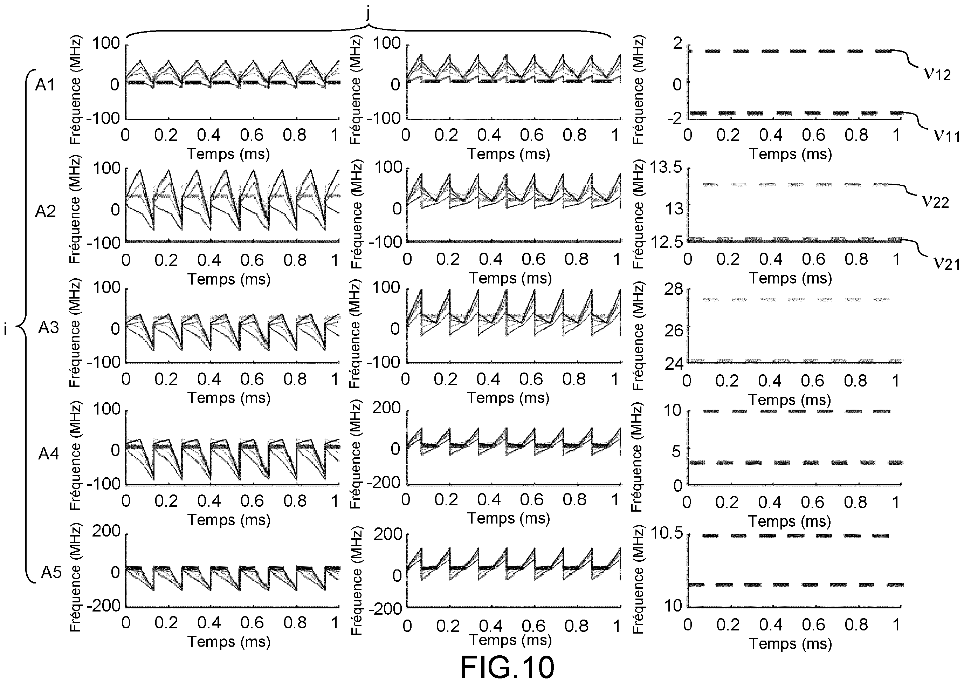

[Fig 10] La figure 10 illustre les fréquences des résultats des démodulations obtenus après l'étape G.

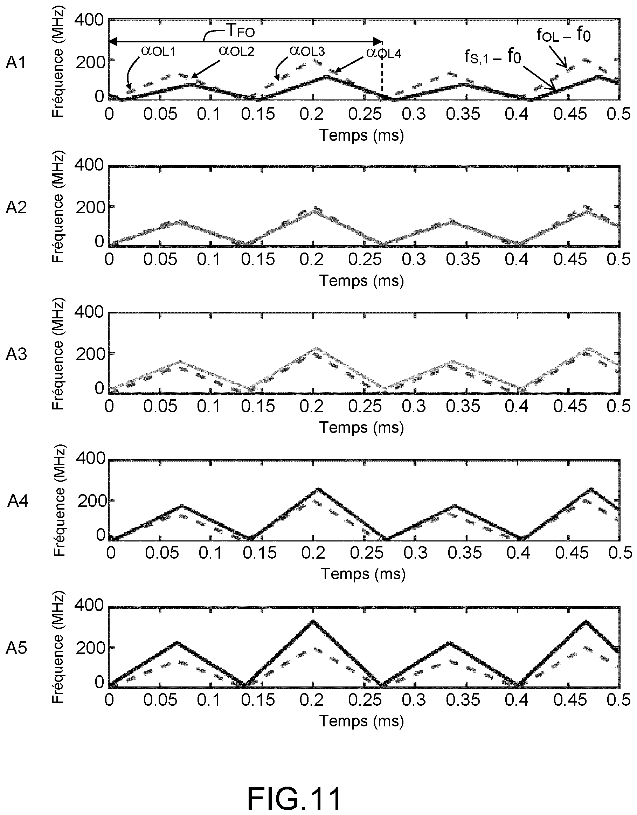

[Fig 11] La figure 11 présente l'équivalent de la figure 8a pour un cas plus général avec une forme d'onde de l'oscillateur local présentant 4 pentes de fréquence $\alpha_{OL1}$, $\alpha_{OL2}$, $\alpha_{OL3}$, $\alpha_{OL4}$.

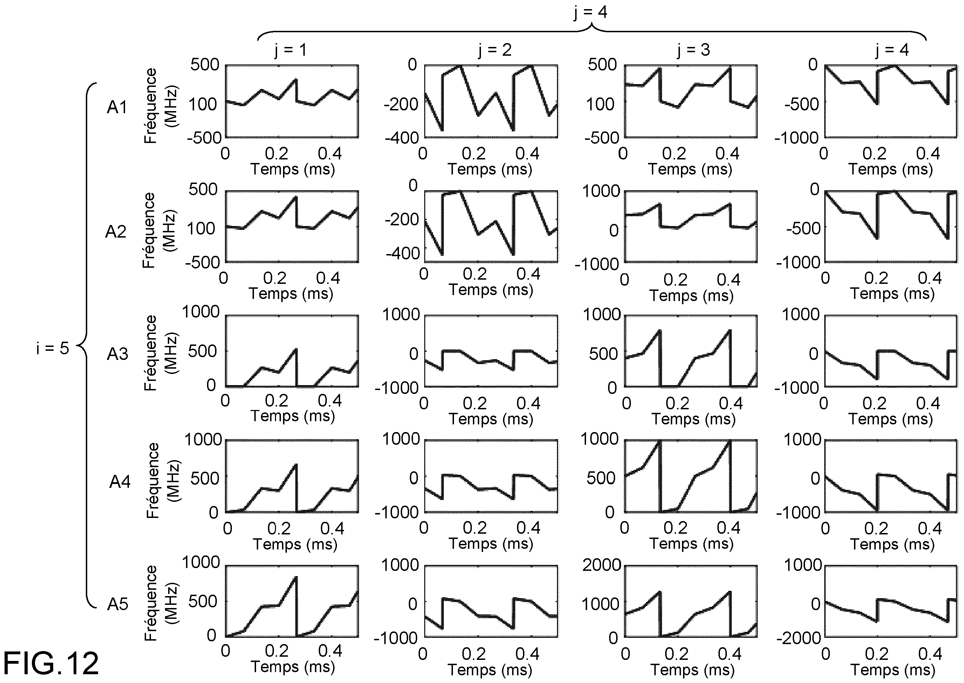

[Fig 12] La figure 12 illustre l'équivalent de la figure 9 pour le cas à 4 pentes.

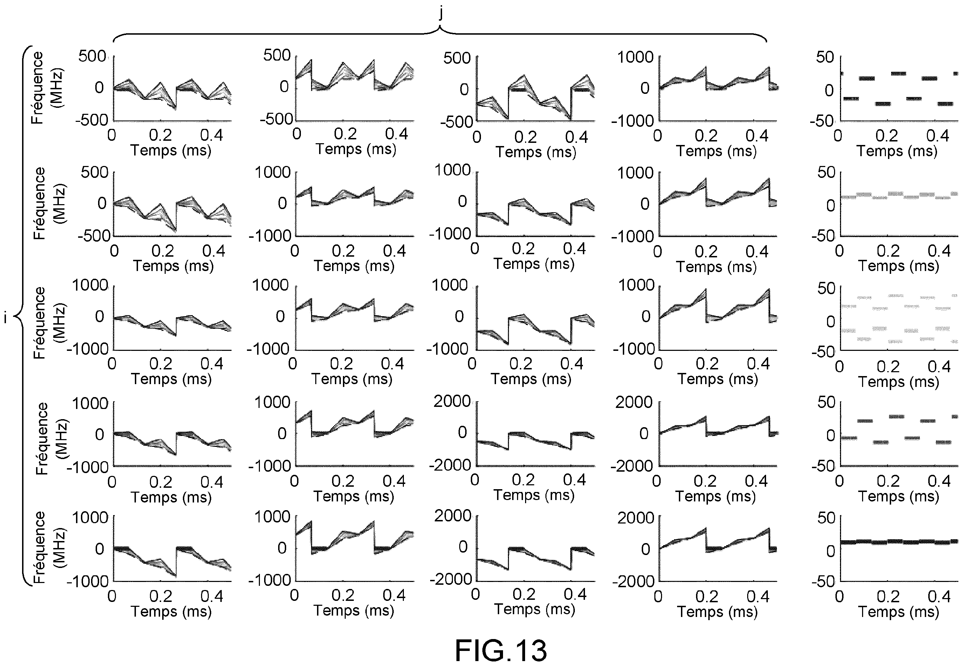

[Fig 13] La figure 13 illustre l'équivalent de la figure 10 pour le cas à 4 pentes.

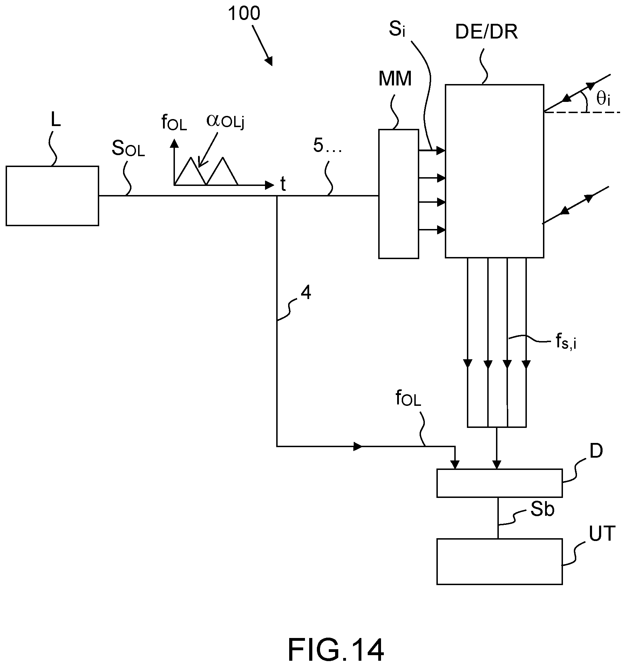

[Fig 14] La figure 14 illustre schématiquement un lidar cohérent pour imagerie selon l'invention adapté à la mise en oeuvre de la première variante de la méthode de traitement selon l'invention.

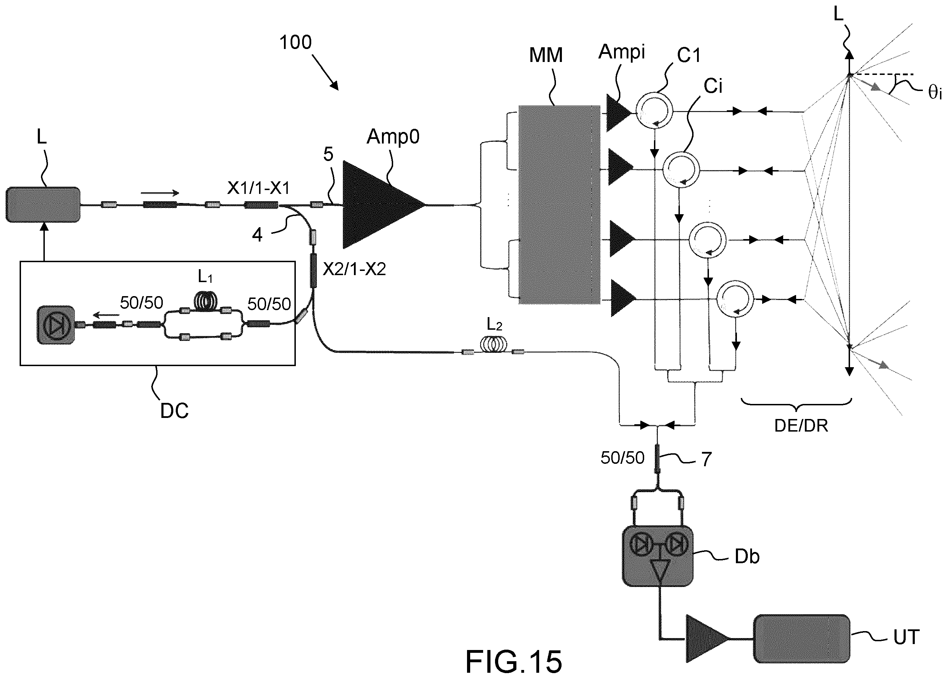

[Fig 15] La figure 15 illustre une implémentation du lidar de la figure 14 avec des fibres optiques et des coupleurs optiques 1x2.

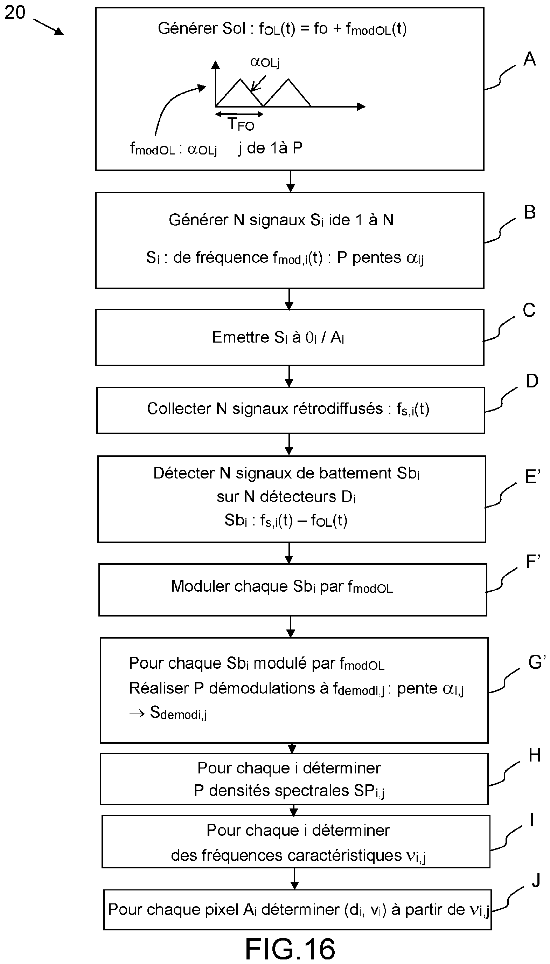

[Fig 16] La figure 16 illustre une deuxième variante de la méthode d'imagerie selon l'invention.

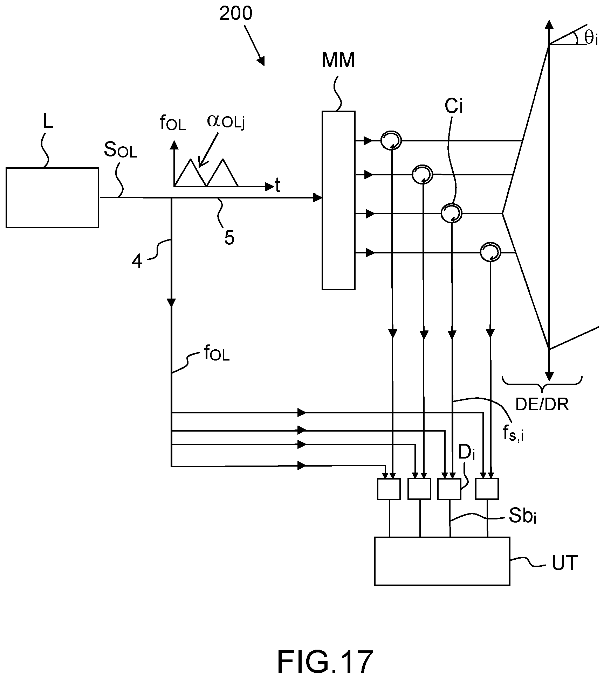

[Fig 17] La figure 17 illustre schématiquement un lidar cohérent pour imagerie selon l'invention, adapté à la mise en oeuvre de la deuxième variante de la méthode de traitement selon l'invention.

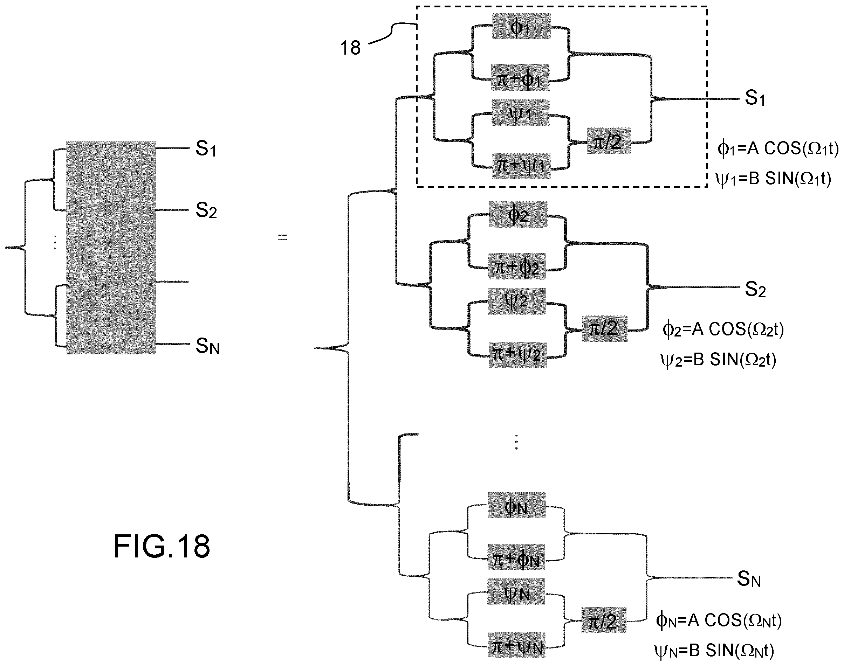

[Fig 18] La figure 18 illustre un dispositif pour modifier la forme d'onde par pixel à base de modulateurs en phase et quadrature mis en parallèle.

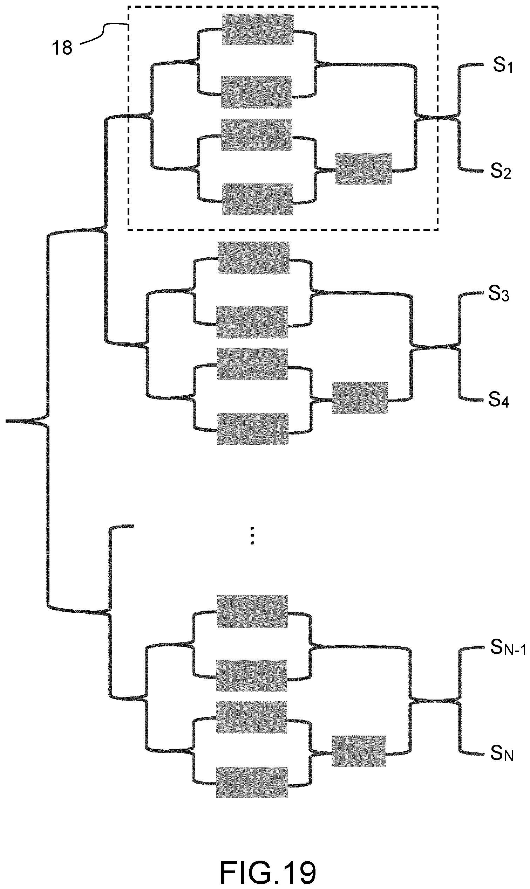

[Fig 19] La figure 19 illustre un dispositif pour modifier la forme d'onde tel que décrit figure 18 mais avec deux voies utilisées.

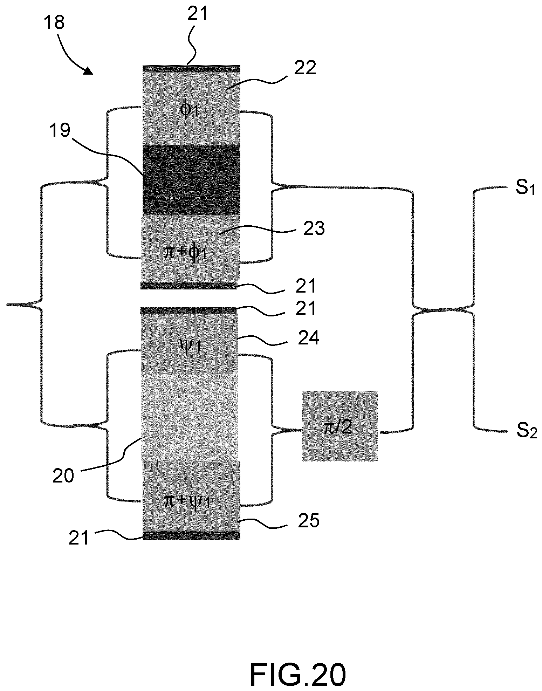

[Fig 20] La figure 20 illustre un modulateur élémentaire à masse flottante.

## DESCRIPTION DETAILLEE DE L'INVENTION

Le lidar et la méthode de traitement selon l'invention permettent d'adresser simultanément plusieurs pixels d'une image.

Le principe général consiste à générer, à partir d'une seule source laser, plusieurs formes d'onde différentes par modulation externe, qui sont ensuite émises en étant orientées chacune dans une direction différente correspondant à un pixel de l'image à réaliser. Le signal cohérent rétrodiffusé par un ou des éléments présent(s) dans le champ observé, et issu de la rétrodiffusion des différentes ondes émises, est ensuite collecté sur une photodiode (première variante) ou plusieurs photodiodes (deuxième variante) pour l'ensemble des pixels. Un élément de la scène est par exemple un objet immobile, une cible en mouvement...

Un traitement numérique parallèle du/des signaux détectés et numérisés permet, pour chaque pixel, de ne retrouver que le signal associé à la direction souhaitée (correspondant à une forme d'onde particulière). La détection restant cohérente, l'analyse permet de mesurer simultanément la distance et la vitesse pour un nombre de pixels correspondant au nombre de formes d'onde différentes émises.

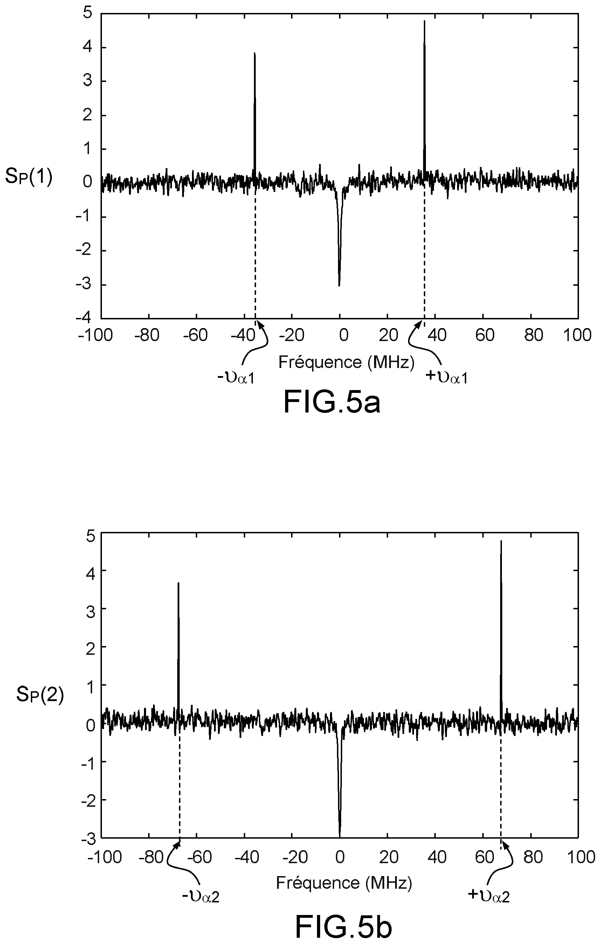

Pour différencier les signaux issus des formes d'onde distinctes (et donc des pixels distincts), le traitement de signal se base sur une méthode de traitement décrite dans le document WO2018/036946, dont les principales étapes sont rappelées ci-dessous et illustrées figures 4 et 5, pour l'exemple d'une modulation initiale de l'oscillateur local avec deux pentes $\alpha 1$ et $\alpha 2$

Le lidar du document WO2018/036946 et le traitement associé s'applique au signal de battement Sb obtenu à partir de l'interférence entre l'oscillateur local OL de fréquence $f_{OL}(t)$, et un signal optique fs(t) rétrodiffusé par une cible illuminée par le lidar. La fréquence $f_{OL}(t)$ est constituée de la somme d'une valeur moyenne f0 et d'une fréquence de modulation $f_{modOL}(t)$ issue de la modulation de la source.

$$f_{OL}(t) = f0 + f_{modOL}(t)$$

La fréquence de modulation $f_{modOL}(t)$ est périodique et telle que chaque période comprenne P parties linéaires, soit P pentes de fréquence $\alpha j$, avec j indice variant de 1 à P, qui se joignent selon des sommets. Le nombre de pentes P est supérieur ou égal à 2.

La définition suivante introduite dans ce document, est également valable pour l'invention :

On dénomme modulation l'opération consistant à ajouter une fréquence à un signal initial et démodulation l'opération consistant à soustraire une fréquence du signal initial. Ainsi moduler à +f est équivalent à démoduler à -f et réciproquement.

Dans l'espace des temps, la modulation ou la démodulation consistent à multiplier un signal temporel initial S0(t) par un nombre, qui est un nombre réel pour une modulation/démodulation réelle (un cosinus) et un nombre complexe pour une modulation/démodulation complexe.

Par exemple moduler de manière complexe par une fréquence f équivaut à multiplier S0(t) par exp(2j$\pi$ft). De même démoduler de manière complexe par une fréquence f équivaut à multiplier S0(t) par exp(-2jrrft).

Lorsque la fréquence f(t) est fonction du temps, il convient de multiplier par :

[Math 3]

$$\exp\left[2j\pi\int_0^t f(u)du\right]$$

pour une modulation et par :

[Math 4]

$$\exp\left[-2j\pi\int_0^t f(u)du\right]$$

pour une démodulation.

La figure 4 illustre le cas d'une forme d'onde du signal $f_{modOL}$ comprenant 2 pentes $\alpha1 = 0.2$ MHz/$\mu$s et $\alpha2 = -0.2$ MHz/$\mu$s pour une fréquence moyenne du laser de 1.55 $\mu$m.

La figure 4a illustre la variation en fonction du temps de la fréquence de l'oscillateur local $f_{OL}(t)$ et de la fréquence signal fs(t) (décalée).

La figure 4b illustre les deux composantes fréquentielles du signal de battement lidar Sb, fs-$f_{OL}$ et $f_{OL}$-fs. En effet celui-ci étant réel, il présente une composante de fréquence positive et une composante de fréquence négative.

Dans une première étape on module de manière complexe le signal de battement Sb par la fréquence de modulation $f_{modOL}$ pour obtenir un signal modulé $S_{mod}$. Le signal réel de battement lidar Sb est modulé en complexe numériquement par une fréquence associée à la forme d'onde, c'est-à-dire $f_{OL}$-f0, avec f0 fréquence moyenne de la source laser. On reconstruit alors pour le signal modulé $S_{mod}$ une fréquence instantanée correspondant à :

$$fs-f_{OL} + (f_{OL}-f0) = fs-f0$$

$$f_{OL}-fs+ (f_{OL}-f0) = 2f_{OL} - f0 - fs$$

La figure 4c illustre la variation en fonction du temps de la fréquence du signal modulé obtenu $S_{mod}$.

Dans une deuxième étape on démodule de manière complexe le signal modulé $S_{mod}$ par P fréquences de démodulation $f_{demod}(j)$ présentant une pente unique respectivement égale à une pente de fréquence $\alpha j$ de la fréquence de modulation $f_{mod}$, pour obtenir P signaux démodulés $S_{demod}(j)$. Ainsi P démodulations complexes sont appliquées à l'aide de P signaux numériques $f_{demod}(j)$ de pente unique $\alpha j$.

Les figures 4d et 4e illustrent respectivement la variation en fonction du temps des fréquences de démodulation $f_{demod}(1)$ (pente $\alpha1$) et $f_{demod}(2)$ (pente $\alpha2$).

Afin de recaler les différentes fréquences, la fréquence de démodulation d'indice j (correspondant à une pente $\alpha j$) est décalée d'un temps de décalage tdj dépendant de j, de P et de la période de modulation $T_{FO}$. Préférentiellement, le temps de décalage est égal à :

$$tdj = (j-1)/P * T_{FO}$$

Ainsi pour 2 pentes $f_{demod}(1)$ n'est pas décalée et $f_{demod}(2)$ est décalée de $T_{FO}/2$ (voir figure 4e).

Les figures 4f et 4g illustrent respectivement la variation en fonction du temps de la fréquence du signal démodulé $S_{demod}(1)$ et $S_{demod}(2)$.

Chaque démodulation correspond à la recherche du signal d'intérêt dans l'ensemble des cases distances. On retrouve alors dans le signal démodulé d'indice j un plateau de fréquence caractéristique $v_{\alpha j}$. Pour le cas de 2 pentes, $S_{demod}(1)$ permet de déterminer $v_{\alpha1}$ tandis que $S_{demod}(2)$ permet de déterminer $v_{\alpha2}$. Chaque fréquence $v_{\alpha j}$ correspond à l'écart, mesuré à un temps pour lequel fs(t)-f0 présente une pente de fréquence $\alpha j$, entre la fréquence de démodulation $f_{demod}(j)$ et la fréquence fs(t)-f0, elle-même ayant été reconstituée à l'aide de la modulation du signal de battement par la fréquence $f_{OL}$-f0 = $f_{modOL}$.

Chaque fréquence $v_{\alpha j}$ correspond à l'écart, mesuré à un temps pour lequel fs (t)-f0 présente une pente de fréquence $\alpha_j$, entre la fréquence de démodulation $f_{demod}$(j) et la fréquence fs(t)-f0, elle-même ayant été reconstituée à l'aide de la modulation du signal de battement par la fréquence $f_{OL}$-f0.

Dans la figure 4f, le plateau le plus large correspond à +$v_{\alpha 1}$ tandis que le plateau plus faible correspond à -$v_{\alpha 1}$. De la même manière dans la figure 4g, le plateau le plus large correspond à +$v_{\alpha 2}$ tandis que le plateau plus faible correspond à -$v_{\alpha 2}$.

Afin de mesurer ces fréquences caractéristiques on détermine ensuite les P densités spectrales SP(j) des P signaux démodulés $S_{demod/j}$. Il s'agit de réaliser une analyse temps/fréquence, soit une transformée fréquentielle du signal $S_{demod/j}$(t), pour faire apparaître la fréquence caractéristique $v_{\alpha j}$ sous forme de pics. Après cette analyse temps-fréquence (typiquement réalisée par exemple par transformée de Fourier rapide), le pic correspondant à +$v_{\alpha 1}$ a une amplitude prépondérante et est donc détecté.

La figure 5 illustre les densités spectrales SP(1) (figure 5a) et SP(2) (figure 5b) des spectres déterminés à partir des signaux $S_{demod}$(1) et $S_{demod}$(2). La fréquence caractéristique recherchée $v_{\alpha j}$ présente la densité spectrale la plus élevée. On retrouve un pic plus faible à la fréquence opposée. Un pic négatif à la fréquence zéro est dû à un filtrage du signal pour les basses fréquences.

Puis la méthode comprend une étape de détermination des P fréquences caractéristiques $v_{\alpha j}$ correspondant respectivement au maximum des P densités spectrales SP(j). En effet la fréquence présentant le plateau le plus large dans le signal $S_{demod/j}$(t), qui correspond à la fréquence caractéristique recherchée, est celle présentant la densité spectrale la plus élevée.

Un deuxième plateau de durée moins importante (et donc conduisant à une raie moins intense après analyse spectrale) est également présent mais la fréquence correspondante présente une densité spectrale plus faible que celle de la fréquence caractéristique. Ce signal provient des modulations et démodulations décrites précédemment sur l'autre composante du signal de battement générée par la détection réelle (composante de fréquence négative si le signal de cible correspond à une fréquence positive ou, inversement, composante de fréquence positive si le signal de cible correspond à une fréquence négative).

Enfin on détermine une information de vitesse v et d'une information de distance d de la cible T à partir desdites P fréquences caractéristiques $v_{\alpha j}$, à partir de la formule :

[Math 5]

$$v_{\alpha_j} = \frac{2\,v}{\lambda} - \frac{2\alpha_j d}{c}$$

De manière synthétique la méthode décrite dans le document WO2018/036946 a pour objectif de retrouver le battement dans un lidar cohérent à modulation de fréquence même pour des portées très importantes (correspondant en particulier à un temps de vol supérieur à la durée d'une pente de fréquence donnée dans la forme d'onde). On pré-module le battement issu du signal rétrodiffusé et de l'oscillateur local par un signal synthétique composé de la forme d'onde de l'oscillateur local et on démodule avec une fonction utilisant les pentes de fréquences composant la forme d'onde émise.

Pour ce traitement, la forme d'onde est supposée connue avec une grande précision (ce qui peut être réalisé grâce à la méthode décrite dans le brevet FR15/00603). Le signal réel de battement lidar (aux fréquences $f_s$-$f_{OL}$ et $f_{OL}$-$f_s$) peut donc être modulé numériquement par une fréquence associée à la forme d'onde de l'oscillateur local (soit $f_{OL}$-f0 avec f0 fréquence moyenne du laser). On retrouve alors une fréquence instantanée correspondant à $f_s$-$f_{OL}$ + ($f_{OL}$-f0) = $f_s$-f0 et une fréquence instantanée (associée à une détection réelle) correspondant à $f_{OL}$-$f_s$+ $f_{OL}$-f0 = 2.$f_{OL}$-f0-$f_s$.

P étant le nombre de pentes de fréquence, P démodulations complexes sont alors appliquées à l'aide de P signaux numériques présentant une pente de la forme d'onde et une période correspondant à la période totale de la forme d'onde.

Pour recaler les différences de fréquences, la fréquence de la démodulation j (correspondant à une rampe de fréquence de pente j, pour j compris entre 1 et P) est décalée de (j-1)/P période de la forme d'onde.

Cette démodulation correspond à l'opération de recherche du signal dans l'ensemble des cases distances. On retrouve alors un plateau de fréquence qui, après analyse temps-fréquence, conduira à un signal clairement identifiable (pic dans la densité spectrale de puissance).

La méthode d'imagerie selon l'invention se décline selon deux variantes, conduisant à deux architectures de lidar légèrement différentes. Cette méthode utilise le concept du traitement décrit ci-dessus dans un cadre différent de celui décrit dans le document WO2018/036946.

La méthode d'imagerie 10 selon la première variante, mise en oeuvre par un lidar cohérent, est illustrée figure 6.

Dans une première étape A un signal oscillateur local $S_{OL}$ est généré. L'oscillateur local présentant une fréquence oscillateur local $f_{OL}$ modulée périodiquement et constituée de la somme d'une valeur moyenne f0 et d'une fréquence de modulation $f_{modOL}$ périodique :

$$f_{OL}(t) = f0 + f_{modOL}(t)$$

Chaque période $T_{FO}$ comprend P parties linéaires présentant respectivement P pentes de fréquences $\alpha_{OLj}$ indicées j variant de 1 à P. L'oscillateur local est du même type que celui décrit dans le document WO2018/036946.

Dans une deuxième étape B on génère, à partir du signal oscillateur local, N signaux d'émission Si indicés i, i variant de 1 à N. Chaque signal d'émission Si présente une fréquence émise $f0+f_{mod,i}$ où $f_{mod,i}$ est une fréquence fonction du temps, présentant P pentes de fréquences prédéterminées $\alpha_{i,j}$ synchronisée avec la fréquence oscillateur local, c'est-à-dire avec les P pentes $\alpha_{OLj}$ de $f_{modOL}$, tel qu'illustré figure 6bis pour le cas P=4. On entend par synchronisé le fait que, pour chaque i, les pentes de fréquences $\alpha_{i,j}$ changent de valeur en même temps que les pentes $\alpha_{OLj}$.

Pour des raisons de simplification de la présentation on introduit les pentes $\alpha_{ci,j}$ permettant de définir les pentes de $f_{mod,i}$ par rapport aux pentes $\alpha_{OLj}$ selon la formule :

$$\alpha_{i,j} = \alpha_{OLj} + \alpha_{ci,j}$$

On introduit ainsi la fréquence $f_{c,i}$ définie comme suit :

$$f_{mod,i} = f_{modOL} + f_{c,i}$$

Selon une variante préférée, pour chaque i les pentes $\alpha_{i,j}$ sont déterminées comme le produit de $\alpha_{OLj}$ par un nombre réel $r_i$. La figure 7 illustre cette variante préférée pour le cas d'un oscillateur local à deux pentes $\alpha1$ et $\alpha2$ (P=2), et la génération de cinq signaux Si (N=5) de modulation de fréquence $f_{mod,\,i}$. Dans cet exemple on a la fréquence de S3 $(f0+f_{mod,\,3})$ égale à $f_{OL}$ (ou autrement dit, $f_{mod,\,3} = f_{modOL}$ ) soit $\alpha_{c3j} = 0$ pour tout j.

Les pentes choisies sont :

$$\alpha_{c1,j} = -0.75\ \alpha_{OLj} \ ; \ \alpha_{c2,j} = 0.45\ \alpha_{OLj} \ ; \ \alpha_{c3,j} = 0 \ ; \ \alpha_{c4,j} = 0.3\ \alpha_{OLj} \ ; \ \alpha_{c5,j} = 0.675\ \alpha_{OLj}.$$

Cela correspond à :

$$r_1 = 0.25 \ ; \ r_2 = 0.55 \ ; \ r_3 = 1 \ ; \ r_4 = 1.3 \ ; \ r_5 = 1.675.$$

Chaque courbe correspond à la variation de fréquence en fonction de temps du signal considéré. Dans la suite un signal se caractérise par l'évolution de sa fréquence en fonction du temps.

La méthode est généralisable à un nombre quelconque de pentes par forme d'onde.

Préférentiellement P est pair. Un mode de réalisation préféré comprend une fréquence oscillateur local à 4 pentes, avec $\alpha2 = -\alpha1$ et $\alpha4 = -\alpha3$. Préférentiellement P est pair et on a $\alpha_{j+1} = -\alpha_j$ par couple de pentes consécutives.

A l'étape C chaque signal d'émission Si est émis dans une direction associée Oi. Les directions Oi sont choisies de manière à couvrir une portion d'espace prédéterminée correspondant au champ observé, chaque direction Oi correspondant à un pixel Ai de l'image du champ observé réalisée par le lidar selon l'invention. L'exemple de la figure 7 illustre 5 pixels mais la méthode est généralisable à un nombre plus élevé de pixels.

A l'étape D on collecte les N signaux rétrodiffusés issus respectivement de la rétrodiffusion des N signaux d'émission S1,...SN par au moins un élément présent dans la portion d'espace observée. Un signal rétrodiffusé indicé i présente une fréquence signal $f_{s,i}$. En l'absence de recouvrement entre le champ de collection associé à chaque pixel, le signal rétrodiffusé à la fréquence fs,i collecté est celui qui revient sur l'optique à Oi.

Dans une étape E le signal de battement Sb est détecté. Ce signal Sb est généré à partir de l'interférence entre l'oscillateur local $S_{OL}$ et la somme des N signaux rétrodiffusés. La puissance de l'oscillateur local étant généralement largement supérieure à celle issue de chacun des signaux rétrodiffusés, le signal Sb peut être décrit comme la somme des N signaux de battement Sbi, issu chacun du battement de l'oscillateur local avec le signal rétrodiffusé par l'au moins un élément présent dans le champ observé et éclairé selon la direction Θi.

Chaque signal de battement Sbi se caractérise par une fréquence égale à $f_{s,i}(t) - f_{OL}(t)$. A un instant t, toutes les fréquences des signaux de battement se superposent et les différents signaux Sbi ne sont pas discernables, mélangés dans le signal Sb.

A titre illustratif la figure 8 décrit l'évolution en fonction du temps de différentes fréquences d'intérêt pour 5 pixels A1 à A5 correspondant chacun à un élément du champ observé présentant une distance et une vitesse différente et connue. L'élément correspondant à Ai (c'est-à-dire se trouvant selon la direction moyenne Oi) est illuminé par le signal Si décrit figure 7.

<div align="center">

A1 (d1= 2000 m ; v1=0m/s)

A2 (d2= 200 m ; v2=10m/s)

A3 (d3= 500 m ; v3=20m/s)

A4 (d4= 800 m ; v4=5m/s)

A5 (d5= 30 m ; v5=8m/s)

</div>

La figure 8a montre l'évolution de la fréquence $f_{s,i}$-f0 caractérisant le signal rétrodiffusé pour chaque pixel Ai, dont le décalage temporel (voir écart 8 sur le zoom de figure 8a du pixel A1) dépend de la distance à l'objet et le décalage spectral (voir par exemple écart 9 sur la figure 8a du pixel A3) dépend de la vitesse radiale de la cible. Dans cet exemple, l'oscillateur local (en trait pointillé sur la figure 8a) est constitué par le signal S3 (de fréquence $f_{OL}$).

La figure 8b montre la fréquence instantanée du battement de cette rétrodiffusion avec l'oscillateur local. Par souci de simplification, seule la fréquence associée à $f_{s,i}$-$f_{OL}$ est présentée sur la figure. En toute rigueur, une autre fréquence $f_{OL}$-$f_{s,i}$ est également présente. L'ensemble des fréquences instantanées présentées séparément sur la figure 8b sont présentes simultanément dans le signal de battement Sb sur la photodiode et ne peuvent, à ce stade, être distinguées.

Pour discriminer le signal issu de chaque direction Oi, le battement mesuré et numérisé est ensuite démodulé numériquement avec N fonctions de démodulation complexes distinctes, en reprenant le concept du document WO2018/036946 (voir ci-dessus).

Le traitement effectué sur le signal de battement consiste d'abord en une étape F de modulation de manière complexe du signal de battement Sb par la fréquence de modulation de l'oscillateur local $f_{modOL}$ (dite pré-modulation).

Puis dans une étape G on réalise NxP démodulations complexes du signal de battement modulé (par la fréquence de modulation de l'oscillateur local $f_{modOL}$). Préférentiellement les NxP démodulations s'effectuent en parallèle pour minimiser la durée du traitement. Chaque démodulation complexe indicée i, j consiste à démoduler par une fréquence de démodulation $f_{demod\,i,j}$ présentant une pente unique égale à la pente $\alpha_{i,j}$. On obtient alors NxP signaux démodulés $S_{demod\,i,j}$.

La pré-modulation peut s'effectuer de manière « globale » sur le signal Sb avant les NxP démodulations ou de manière « locale » en effectuant NxP [modulation par $f_{modOL}$/démodulation par $f_{demod\,i,j}$].

Les démodulations complexes sont du même type que celles du document WO2018/036946 mais calculées à partir de la pente $\alpha_{i,j}$ associée au pixel i, pente définie par la relation $\alpha_{i,j} = \alpha_{OLj} + \alpha_{ci,j}$

Ainsi dans l'invention, le signal Sb consiste en une somme de signaux chacun avec une forme d'onde distincte mais l'oscillateur local est constant. L'étape F (pré-modulation) est identique à la première étape du document WO2018/036946 (ce qui est rendu possible par le fait qu'un seul oscillateur local est utilisé). On met ensuite en oeuvre dans l'étape G, N deuxièmes étapes du document WO2018/036946 (N correspondant au nombre de pixels traités en parallèle) pour prendre en compte chacune des formes d'onde (associée à un pixel Ai).

En reprenant l'exemple décrit dans les figures 7 et 8, on définit alors les 5x2 fonctions de démodulation présentées sur la figure 9. Cette figure 9 illustre la fréquence résultant de la pré-modulation par la fréquence de l'oscillateur local puis de l'étape de démodulation : $f_{modOL} + f_{demod\,i,j}$

Sur cette figure 9, les fonctions de démodulation d'une même ligne i sont construites à partir des pentes utilisées pour un pixel i. Les fonctions de démodulation d'une même colonne j correspondent au numéro j de la pente dans chaque d'onde.

Préférentiellement la fréquence de démodulation est périodique selon la période de modulation de l'oscillateur local $T_{FO}$.

Préférentiellement chaque fréquence de démodulation $f_{demodi,j}$ est décalée d'un temps de décalage tdj fonction de j, P et $T_{FO}$, préférentiellement suivant la relation :

$$tdj = (j-1)/P.T_{FO}$$

Les résultats des démodulations sont présentés sur la figure 10 qui illustre les fréquences des signaux $S_{demodi,j}$ obtenus après l'étape G. Par souci de lisibilité, les plateaux de fréquence ont été tracés en gras puis isolés (et zoomés) dans la troisième colonne de cette figure. Cette colonne de droite illustre donc les seules fréquences et instants pour lesquels une fréquence instantanée demeure constante, quel que soit le pixel d'origine du signal.

Comme le montre la figure 10, on ne retrouve (sous certaines conditions explicitées plus loin) de plateaux de fréquence que pour le signal issu d'un pixel i et démodulé par la fonction définie à partir des pentes du pixel i. Pour chaque courbe de la troisième colonne, les deux plateaux correspondent chacun à une fréquence, associée à une valeur de pente. Sur la figure 10, il s'agit d'une forme d'onde à 2 pentes, donc 2 plateaux sont présents, associé aux deux pentes. La fréquence la plus faible correspond forcément à la pente positive et la fréquence la plus élevée à la pente négative (cf équation Math 1).

L'utilisateur maitrisant la fonction de démodulation, il est donc possible de retrouver le signal issu d'un pixel donné. En effet, après démodulation par une fonction associée à un pixel i et analyse temps/fréquence (par exemple une transformée de Fourier), seuls les plateaux de fréquence présentés sur la figure 10 conduisent à un pic étroit dans la densité spectrale de puissance (de la même manière que sur les figures 5a et 5b).

Les autres signaux conduisent à un bruit additionnel de même intégrale mais dont la largeur spectrale réduit significativement l'amplitude.

Cette absence de cross-talk entre les pixels demeure vérifiée tant que les pentes de fréquence des différents pixels ne sont pas harmoniques. Ainsi préférentiellement les pentes $\alpha_{ci,j}$ sont choisies de sorte qu'aucun triplet $\alpha_{i,j} = \alpha_{OLj} + \alpha_{ci,j}$ ne suive une progression harmonique. En d'autres termes les nombres réels $r_i$ ne doivent pas être des multiples entiers les uns des autres. Pour mémoire, dans l'exemple, les pentes choisies sont: $\alpha_{c1\,j} = -0.75\,\alpha_{OLj}$; $\alpha_{c2\,j} = 0.45\,\alpha_{OLj}$ ; $\alpha_{c3\,j} = 0$; $\alpha_{c4\,j} = 0.3\,\alpha_{OLj}$; $\alpha_{c5\,j} = 0.675\,\alpha_{OLj}$, soit $r_1 = 0.25$ ; $r_2 = 0.55$ ; $r_3 = 1$ ; $r_4 = 1.3$ ; $r_5 = 1.675$, qui vérifient cette condition.

L'analyse temps/fréquence est réalisée dans une étape H consistant à déterminer NxP densités spectrales de puissance $SP_{i,j}$ des NxP signaux démodulés $S_{demodi,j}$. Puis dans une étape I on détermine des fréquences caractéristiques vij correspondant à des maximas locaux des NxP densités spectrales de puissance $SP_{i,j}$. Lorsqu'aucun faisceau n'est rétrodiffusé sur le pixel i aucun pic n'est détecté dans les $SP_{i,j}$ correspondants. Lorsqu'un élément est présent et rétrodiffuse un signal selon Oi, un pic à vij sera détecté et donc dans les P SPij. Lorsque plusieurs éléments sont présents et rétrodiffusent selon Oi, plusieurs pics seront détectés dans les P SPij. Dans ce cas il existe plusieurs fréquences vij. Par exemple si 2 éléments différents rétrodiffusent depuis la même direction $\theta_i$, deux séries de fréquence vij et v'ij seront détectées. L'appartenance d'une fréquence au groupe vij ou v'ij sera alors déduite de la cohérence entre les différentes valeurs des fréquences mesurées (qui doivent toutes décrire la même distance et vitesse, avec des fréquences distinctes du fait des pentes de fréquence différentes) Si un même élément occupe plusieurs Oi, il y aura un pic pour chaque Oi. Chaque cible rétrodiffusant depuis une direction $\Theta_i$. génère donc un ensemble de fréquences vij , l'indice j étant associé aux valeurs de pente de fréquence.

Enfin dans une étape finale J on détermine, pour chaque pixel Ai, au moins une information de vitesse vi et au moins une information de distance di à partir des fréquences caractéristiques vij. Il y a autant de couples (di, vi) que d'éléments détectés dans le pixel Ai.

Préférentiellement, l'étape H de détermination de chaque densité spectrale comprend les sous étapes consistant à :

- déterminer une pluralité de densités spectrales élémentaires pour une pluralité d'intervalles de temps $\delta t$ inférieurs ou égaux à la période de modulation $T_{FO}$,
- déterminer chaque densité spectrale d'indice i,j $SP_{i,j}$ à partir de la somme de la pluralité de densités spectrales élémentaires.

Préférentiellement, chaque densité spectrale élémentaire est déterminée par transformée de Fourier rapide FFT.

Pour simplifier le traitement, les transformées de Fourier réalisées pendant la période de la forme d'onde peuvent être directement sommées (en puissance). On réalise donc une accumulation incohérente de densités spectrales élémentaires, qui sont ensuite moyennées. Cette opération permet de réaliser des calculs rapides, chaque densité spectrale élémentaire étant calculée sur un temps $\delta t$ court.

La densité spectrale calculée est préférentiellement égale à la moyenne des densités spectrales élémentaires, afin de toujours obtenir des valeurs numériques normalisées.

D'un point de vue pratique, les calculs de modulation/démodulation, puis de FFT et du carré du module s'effectuent au fur et à mesure de la numérisation du signal de battement, en temps réel, et en parallèle pour chaque i. Puis au bout d'un certain temps d'accumulation, les densités spectrales $SP_{i,j}$ sont obtenues en effectuant la moyenne des densités spectrales élémentaires accumulées.

Le traitement des étapes F à J peut être réalisé sur ordinateur, FPGA, ASIC ou tout composant permettant de réaliser du calcul numérique avec une architecture fortement parallèle. En effet la puissance de calcul requise est importante compte tenu de la nécessité de calculer en temps réel N*P démodulations et analyse temps/fréquence d'un même signal.

Afin de minimiser le bruit additionnel généré par les signaux issus des autres pixels il convient d'avoir des différences de pentes de fréquence mises en jeu importantes. En effet, dans ce cas, le résultat de la démodulation se répartira sur un plus grand nombre de cases spectrales et son amplitude en sera d'autant diminuée.

La méthode selon l'invention permet ainsi un traitement lidar complet de plusieurs pixels en même temps, permettant le réalisation d'une image (distance / vitesse).

Elle n'utilise qu'un seul laser, un seul oscillateur local et un seul détecteur (dans sa première variante) et un seul convertisseur analogique digital (ADC pour « Analogic Digital Converter »).

Selon un mode de réalisation la méthode est étendue en utilisant plusieurs lasers décalés spectralement pour accroitre encore le nombre de pixels traités simultanément. Ceci réduit d'autant le temps de mesure par pixel et permet donc d'accroitre le nombre d'images par unité de temps.

Enfin, comme dans le cadre du document WO2018/036946, la méthode selon l'invention permet d'accroître la portée du lidar qui n'est plus limitée que par la puissance émise : pour l'ensemble des pixels traités en parallèle, la portée n'est plus limitée par la durée d'une pente de fréquence mais par la période complète de la forme d'onde.

La figure 11 présente l'équivalent de la figure 8a pour un cas plus général avec une forme d'onde de l'oscillateur local présentant 4 pentes de fréquence $\alpha_{OL1}$, $\alpha_{OL2}$, $\alpha_{OL3}$, $\alpha_{OL4}$.

On a préférentiellement $\alpha_{OL2} = - \alpha_{OL1}$ et $\alpha_{OL4} = - \alpha_{OL3}$

La figure 12 illustre l'équivalent de la figure 9 et la figure 13 illustre l'équivalent de la figure 10 pour le cas à 4 pentes de la figure 11.

Sous réserve du choix des pentes de fréquence non harmoniques, seuls les plateaux de fréquence associés à un pixel i apparaissent après démodulation par une fonction générée à partir des pentes de fréquence présentes dans la forme d'onde émise pour le pixel i. Les pentes de fréquence utilisées sont pour cet exemple :

$$\alpha_{c1,j} = -0.42 \, \alpha_{OLj} \; ; \; \alpha_{c2,j} = -0.2 \, \alpha_{OLj} \; ; \; \alpha_{c3,j} = 0 \; ; \; \alpha_{c4,j} = 0.25 \, \alpha_{OLj} \; ; \; \alpha_{c5,j} = 0.6 \, \alpha_{OLj}$$

On obtient dans la colonne de droite de la figure 13 4 des plateaux correspondant à 4 fréquences caractéristiques, ce qui permet de manière connue, par rapport à la détermination de deux fréquences caractéristiques, de lever les ambiguïtés liées au repliement de spectre.

Selon un mode de réalisation la méthode d'imagerie selon l'invention comprend en outre une étape de balayage dans laquelle on met en oeuvre les étapes A à J successivement pour une pluralité de champs observés. Les pixels Ai associés à un champ observé donné sont classiquement dénommés « imagette » et le champ observé champ de regard. Le champ de vue complet plus vaste est obtenu par juxtaposition d'imagettes obtenues en modifiant, pour chaque imagette, l'angle moyen d'émission de l'ensemble des angles Oi associés à une imagette. Le balayage est préférentiellement mécanique.

La figure 14 illustre schématiquement, selon un autre aspect de l'invention, un lidar cohérent pour imagerie 100 adapté à la mise en oeuvre de la première variante 10 de la méthode de traitement selon l'invention décrite précédemment.

Le lidar 100 reprend en grande partie l'architecture optique d'un lidar cohérent à modulation de fréquence : la source laser L est modulée en fréquence soit par injection de courant soit en externe et configurée pour générer le signal oscillateur local de fréquence $f_{OL}$.

Une partie 4 du signal oscillateur local est prélevée pour servir de référence oscillateur local pour la réalisation du signal de battement Sb.

L'autre partie 5 alimente un dispositif multiplexeur/modulateur MM, configuré pour générer N voies à partir du signal oscillateur local 5. Le dispositif MM est également configuré de sorte que chaque voie subit une modulation en fréquence supplémentaire, de manière à former les N signaux d'émission Si indicés i variant de 1 à N. Cette sur-modulation permet d'obtenir une modulation de fréquence totale dépendant de la voie. Préférentiellement le signal de chaque voie i passe au travers d'un circulateur Ci permettant de distinguer l'onde émise de l'onde reçue (voir plus loin).

Le lidar 100 comprend également un dispositif d'émission DE configuré pour émettre chaque signal d'émission Si dans une direction associée Oi pour couvrir le champ observé et un dispositif de réception DR pour collecter les signaux rétrodiffusés de fréquence $f_{s,i}$ selon cette même direction Oi .

Préférentiellement les dispositifs DR et DE utilisent la même optique (lidar mono-statique) et les signaux d'émission et de réception sont discriminés par des circulateurs.

Un détecteur D détecte les interférences entre l'oscillateur local et les signaux rétrodiffusés et génère le signal de battement Sb. Une unité de traitement UT réalise le traitement effectué aux étapes E à J de la méthode 10.

La figure 15 illustre une implémentation du lidar de la figure 14 avec des fibres optiques et des coupleurs optiques $1\times2$ (x/1-x). Le faisceau laser est amplifié par un amplificateur Amp0, par exemple un amplificateur fibré Er-EDFA, et les N voies sont générées à partir d'une pluralité de coupleurs 1x2. Les signaux à la sortie de MM sont préférentiellement également ré-amplifiés par les amplificateurs Ampi, et passent au travers de circulateurs fibrés Ci. Les circulateurs fibrés sont positionnés côte à côte (par exemple en ligne ou en imagette) au plan focal d'une lentille L de manière à émettre chaque signal Si dans une direction Oi prédéterminée, pour couvrir le champ observé. A la réception les signaux rétrodiffusés empruntent la même voie que les signaux d'émission, sont collectés via les circulateurs fibrés et superposés via une pluralité de coupleurs 2x1.

Ainsi au niveau de l'émission des coupleurs réalisent la séparation des différents Sbi, qui sont individuellement amplifiés, passent au travers de circulateurs fibrés, la sortie des fibres étant positionnée au foyer d'une lentille de manière à générer N faisceaux envoyés chacun dans une direction différente. Il s'agit de la mise en oeuvre de composants optiques classiques pour la réalisation de l'émission d'un faisceau dans des directions prédéterminées. D'autres méthodes pour envoyer individuellement chaque Sbi dans l'espace selon un angle associé prédéterminé peuvent être utilisées : miroirs, un modulateur acousto-optique, matrice de micro-miroirs de type MEMS, prisme de Risley, antenne à réseau de phase...

Les signaux rétrodiffusés et le signal oscillateur local sont superposés dans un coupleur 7 et re-divisés en deux voies afin d'alimenter un photodétecteur équilibré (ou balancé) Db, lui-même relié à l'unité de traitement UT. Optionnellement une partie de l'oscillateur local 4 est utilisé dans un dispositif de calibration DC. Ce dispositif a pour objet de calibrer la forme d'onde en fréquence. Le signal issu de l'interféromètre déséquilibré (en longueur) est enregistré et traité selon le traitement issu du brevet WO2016/150783 pour retrouver la fréquence optique de l'oscillateur local. Une correction est ensuite appliquée en fonction de cette mesure pour améliorer la linéarité des rampes de fréquence.

Selon un mode de réalisation le lidar cohérent 100 comprend également un dispositif de balayage configuré pour générer successivement une pluralité d'ensembles de direction, de manière à couvrir une pluralité de champs observés.

La figure 16 illustre une deuxième variante de la méthode d'imagerie selon l'invention. Les étapes A à D sont identiques à la première variante. La différence réside dans le signal détecté. Dans une étape E' on détecte N signaux de battement Sbi sur N détecteurs, un signal de battement Sbi indicé i étant généré à partir de l'interférence entre l'oscillateur local et le signal rétrodiffusé indicé i. Avec l'hypothèse explicitée plus haut selon laquelle la puissance de l'oscillateur local est largement supérieure à celle issue de chacun des signaux rétrodiffusés, les signaux Sbi détectés ici sont bien équivalents aux signaux Sbi tel que définis dans la première variante.

Dans une étape F' on module de manière complexe chaque signal de battement Sbi par la fréquence de modulation de l'oscillateur local $f_{modOL}$ et dans une étape G' on réalise, préférentiellement en parallèle, pour chacun des N signaux de battement modulés indicés i, P démodulations complexes : on réalise donc P démodulations complexe pour chaque i.

Pour chaque i, chaque démodulation complexe indicée j d'un signal de battement modulé consiste à démoduler par une fréquence de démodulation $f_{demodi,j}$ présentant une pente unique égale à la pente $\alpha_{i,j}$, pour obtenir P signaux démodulés $S_{demodi,j}$.

On obtient donc également une matrice de NxP signaux démodulés, qui sont toutefois différents de ceux obtenus avec la première variante, car ils ne contiennent principalement que le signal issu de Oi. L'information est alors extraite de la même manière que dans la première variante par les étapes H, I et J.

L'idée principale de cette variante est de réduire les pertes associées aux recombinaisons 2 à 2 des différents signaux. Cette réduction est réalisée au prix d'une multiplication du nombre de détecteurs qui, selon la technologie utilisée, peut être réalisée à coût réduit. En effet, si le dispositif est réalisé en technologie guide d'onde sur semi-conducteur (PIC pour « Photonic Integrated Circuit »), l'ajout de N-1 détecteurs sur le composant ne conduit pas à un accroissement significatif de la complexité du dispositif total. Cette implémentation nécessite par contre un convertisseur analogique numérique à N voies pour traiter indépendamment les signaux issus des N détecteurs. Elle permet cependant de réduire le bruit de détection, les signaux issus des autres directions que Oi n'arrivant pas sur le détecteur i.

La figure 17 illustre schématiquement un lidar cohérent pour imagerie 200 selon un autre aspect de l'invention, adapté à la mise en oeuvre de la deuxième variante 20 de la méthode de traitement selon l'invention décrite ci-dessus.

L'oscillateur local est subdivisé en N signaux, chaque signal OL de fréquence $f_{OL}$ interférant avec un signal rétrodiffusé de fréquence $f_{s,i}$.

Le lidar 200 comprend N photo-détecteurs Di indicés i configurés pour générer respectivement N signaux de battement, chaque signal de battement Sbi indicé i étant généré à partir de l'interférence entre l'oscillateur local et le signal rétrodiffusé indicé i.

L'unité de traitement UT est configurée pour moduler de manière complexe chaque signal de battement Si par la fréquence de modulation de l'oscillateur local $f_{modOL}$ et pour réaliser, pour chacun des N signaux de battement modulés indicés i, P démodulations complexes. Chaque démodulation complexe indicée j d'un signal de battement modulé indicé i consistant à démoduler par une fréquence de démodulation $f_{demod\ i,j}$ présentant une pente unique égale à la pente $\alpha_{i,j}$, pour obtenir P signaux démodulés $S_{demod\ i,j}$.

Un avantage de cette variante de lidar est que, du fait de la recombinaison électrique dans les détecteurs Di, on s'affranchit des pertes de recombinaison optiques (-3dB par étage).

L'architecture lidar illustrée figure 17 (correspondant à la mise en oeuvre de la deuxième variante) est adaptée à une implémentation en photonique intégrée PIC dans laquelle l'intégration de photo-détecteurs est facilitée et n'est pas très coûteuse, ceux-ci pouvant donc aisément être dupliqués. En architecture fibrée (figure 15) le détecteur est par contre très onéreux et on préférera mettre en oeuvre la première variante à un seul détecteur.

La modification de forme d'onde par pixel peut être réalisée de différentes manières en fonction de l'objectif. Selon un mode de réalisation le dispositif modulateur/multiplexeur MM comprend une pluralité de modulateurs en phase et quadrature (bien connu dans la littérature) agencés en parallèle, comme illustré sur la figure 18, et/ ou en série. Un modulateur élémentaire 18 est un « frequency shifter » bien connu de l'homme de l'art, basé sur l'architecture d'un modulateur I/Q et décrit par exemple dans la publication « Integrated optical frequency shifter in silicon-organic hybrid (SOH) technology » de Lauermann et al, OPTICS EXPRESS 2016 vol 14, n°11. On applique aux modulateurs de phase une tension électrique permettant de générer les phases $\Phi 1$ et $\Psi 1$ de fréquence $\Omega 1$. Par rapport au signal en entrée du dispositif, le signal en sortie est alors décalé en fréquence de la valeur $\Omega 1/2\pi$. En faisant varier la fréquence $\Omega 1$, on peut ainsi générer une forme d'onde aléatoire. Il est, en particulier, possible de générer une forme d'onde en fréquence constituée de P rampes linéaires. Si cette modulation est synchronisée avec celle de l'oscillateur local, il est possible de modifier les pentes de fréquence d'une forme d'onde initiale comme décrit plus haut.

Selon un autre mode de réalisation les deux voies sont utilisées ce qui permet d'avoir, avec le même nombre de composants, 2 pixels par modulateur I/Q, décalant ainsi les pentes de fréquence de $+\alpha_c$ et $-\alpha_c$. Cette implémentation est illustré sur la figure 19. Cette architecture impose par contre de ne pas utiliser le laser directement modulé pour un pixel ($+\alpha_{ci,j} = 0$), car sinon on retrouve une répartition harmonique des fréquences sur 3 pixels et donc une possible ambiguïté entre deux pixels. Cette architecture peut être réalisée en circuit intégré photonique et peut donc conduire à une architecture physique assez compacte.

Une variante préférée du modulateur élémentaire 18, constitué d'un composant en photonique intégrée avec deux sorties par modulateur I/Q (voir figure 19) est illustrée figure 20. L'électrode 19 commune aux deux modulateurs 22 et 23 reçoit une commande en $\cos(\Omega_i(t).t)$ et l'électrode 20 commune aux deux modulateurs 24 et 25 reçoit une commande en $\sin(\Omega_i(t)t)$, $\Omega_i(t)$ désignant la pulsation associée à la modification de fréquence à réaliser sur le pixel i. Les autres électrodes 21 sont en masse flottante Cette architecture avec une masse flottante réduit le nombre de voies sur le driver électronique.

**Revendications**

1. Méthode (10) d'imagerie mise en oeuvre par un lidar cohérent, comprenant les étapes consistant à :

   - A Générer un signal dénommé oscillateur local présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,
   - B Générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,
   - C Emettre chaque signal d'émission Si dans une direction associée (Oi), les directions étant choisies de manière à couvrir une portion d'espace prédéterminée correspondant au champ observé, chaque direction correspondant à un pixel Ai d'une image dudit champ,
   - D Collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,
- E Détecter un signal de battement Sb généré à partir de l'interférence entre l'oscillateur local et les N signaux rétrodiffusés,
- F Moduler de manière complexe le signal de battement Sb par la fréquence de modulation de l'oscillateur local $f_{modOL}$,
- G Réaliser NxP démodulations complexes du signal de battement modulé, chaque démodulation complexe indicée i, j consistant à démoduler par une fréquence de démodulation $f_{demodi,j}$ présentant une pente unique égale à la pente $\alpha_{i,j}$, pour obtenir NxP signaux démodulés $S_{demodi,j}$ ,
- H Déterminer NxP densités spectrales de puissance $SP_{i,j}$ des NxP signaux démodulés $S_{demodi,j}$
- I Déterminer des fréquences caractéristiques (vij) correspondant à des maximas locaux des NxP densités spectrales de puissance,
- J Déterminer, pour chaque pixel Ai, au moins une information de vitesse (vi) et au moins une information de distance (di) à partir des fréquences caractéristiques (vij).

2. Méthode (20) d'imagerie mise en oeuvre par un lidar cohérent comprenant les étapes consistant à :

- A Générer un signal dénommé oscillateur local, présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,
- B Générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,
- C Emettre chaque signal d'émission Si dans une direction associée (Oi), les directions étant choisies de manière à couvrir une portion d'espace prédéterminée correspondant au champ observé, chaque direction correspondant à un pixel Ai d'une image dudit champ,
- D Collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,
- E' Détecter N signaux de battement sur N détecteurs, un signal de battement Sbi indicé i étant généré à partir de l'interférence entre l'oscillateur local et le signal rétrodiffusé indicé i,
- F' Moduler de manière complexe chaque signal de battement Sbi par la fréquence de modulation de l'oscillateur local $f_{modOL}$,
- G' Réaliser, pour chacun des N signaux de battement modulés indicés i, P démodulations complexes, chaque démodulation complexe indicée j d'un signal de battement modulé indicé i consistant à démoduler par une fréquence de démodulation $f_{demodi,j}$ présentant une pente unique égale à la pente $\alpha_{i,j}$, pour obtenir P signaux démodulés $S_{demodi,j}$,
- H Déterminer NxP densités spectrales de puissance $SP_{i,j}$ en effectuant, pour chaque i, P densités spectrales de puissance des P signaux démodulés,
- I Déterminer, pour chaque i, des fréquences caractéristiques ($v_{ij}$) correspondant à des maximas locaux des P densités spectrales de puissance,
- J Déterminer, pour chaque pixel Ai, au moins une information de vitesse (vi) et au moins une information de distance (di) à partir des fréquences caractéristiques ($v_{ij}$).

3. Méthode d'imagerie selon l'une des revendications 1 ou 2 dans laquelle les pentes de fréquence $\alpha_{i,j}$ sont déterminées comme suit : $\alpha_{i,j} = r_i \cdot \alpha_{OLj}$ avec $r_i$ nombre réel.

4. Méthode d'imagerie selon la revendication 3 dans laquelle les nombre réels $r_i$ ne sont pas des multiples entiers les uns des autres.

5. Méthode d'imagerie selon l'une des revendications précédentes comprenant en outre une étape de balayage dans laquelle on met en oeuvre les étapes A à J successivement pour une pluralité de champs observés.

6. Lidar cohérent (100) pour réaliser de l'imagerie comprenant:

- Une source laser (L) configurée pour générer un signal dénommé oscillateur local présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,

- Un dispositif multiplexeur/modulateur (MM) configuré pour générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,

- Un dispositif d'émission (DE) configuré pour émettre chaque signal d'émission Si dans une direction associée (Oi), les directions étant choisies de manière à couvrir une portion d'espace prédéterminée correspondant au champ observé, chaque direction correspondant à un pixel Ai d'une image dudit champ,

- Un dispositif de réception (DR) configuré pour collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,

- Un photodétecteur (D) configuré pour générer un signal de battement Sb généré à partir de l'interférence entre l'oscillateur local et les N signaux rétrodiffusés,

- Une unité de traitement (UT) configurée pour :

  ❖ Moduler de manière complexe le signal de battement Sb par la fréquence de modulation de l'oscillateur local $f_{modOL}$,
  ❖ Réaliser NxP démodulations complexes du signal de battement modulé, chaque démodulation complexe indicée i, j consistant à démoduler par une fréquence de démodulation $f_{demodi,j}$ présentant une pente unique égale à la pente $\alpha_{i,j}$ pour obtenir NxP signaux démodulés $S_{demodi,j}$,
  ❖ Déterminer NxP densités spectrales de puissance $SP_{i,j}$ des NxP signaux démodulés $S_{demodi,j}$
  ❖ Déterminer des fréquences caractéristiques ($v_{ij}$) correspondant à des maxima locaux des NxP densités spectrales de puissance,
  ❖ Déterminer, pour chaque pixel Ai, au moins une information de vitesse (vi) et au moins une information de distance (di) à partir des fréquences caractéristiques ($v_{ij}$).

7. Lidar cohérent (200) pour réaliser de l'imagerie comprenant:

   - Une source laser (L) configurée pour générer un signal dénommé oscillateur local présentant une fréquence d'oscillateur local $f_{OL}$ modulée périodiquement et constituée de la somme d'une valeur moyenne f0 et d'une fréquence de modulation $f_{modOL}$ périodique, chaque période comprenant P parties linéaires présentant respectivement P pentes de fréquences $\alpha_{OLj}$ indicées j, j variant de 1 à P,

   - Un dispositif multiplexeur/modulateur (MM) configuré pour générer, à partir de l'oscillateur local, N signaux d'émission Si indicés i, i variant de 1 à N, chaque signal d'émission Si présentant une fréquence émise $f_{mod,i}$ présentant P pentes de fréquence prédéterminées $\alpha_{i,j}$ synchronisées avec les P pentes de la fréquence oscillateur local et,

   - Un dispositif d'émission (DE) configuré pour émettre chaque signal d'émission Si dans une direction associée (Oi), les directions étant choisies de manière à couvrir une portion d'espace prédéterminée correspondant au champ observé, chaque direction correspondant à un pixel Ai d'une image dudit champ,

   - Un dispositif de réception (DR) configuré pour collecter N signaux rétrodiffusés issus respectivement de la rétrodiffusion des N signaux d'émission par au moins un élément présent dans ladite portion d'espace, un signal rétrodiffusé indicé i présentant une fréquence signal $f_{s,i}$,

   - N photodétecteurs (Di) configurés pour générer respectivement N signaux de battement, chaque signal de battement Sbi indicé i étant généré à partir de l'interférence entre l'oscillateur local et le signal rétrodiffusé indicé i,

   - Une unité de traitement (UT) configurée pour :

     ❖ Moduler de manière complexe chaque signal de battement Si par la fréquence de modulation de l'oscillateur local $f_{modOL}$,
     ❖ Réaliser, pour chacun des N signaux de battement modulé indicés i, P démodulations complexes, chaque démodulation complexe indicée j consistant à démoduler par une fréquence de démodulation $f_{demodi,j}$ présentant une pente unique égale à la pente $\alpha_{i,j}$ pour obtenir P signaux démodulés $S_{demodi,j}$,
     ❖ Déterminer NxP densités spectrales de puissance $SP_{i,j}$ en effectuant pour chaque i, P densités spectrales de puissance des P signaux démodulés $S_{demodi,j}$
     ❖ Déterminer pour chaque i des fréquences caractéristiques ($v_{ij}$) correspondant à des maximas locaux des P densités spectrales de puissance,
     ❖ Déterminer, pour chaque pixel Ai, au moins une information de vitesse (vi) et au moins une information de distance (di) à partir des fréquences caractéristiques ($v_{ij}$).

8. Lidar cohérent selon l'une des revendications 6 ou 7 dans lequel le dispositif modulateur/multiplexeur (MM) comprend une pluralité de modulateurs en phase et quadrature (18) agencés en parallèle.

9. Lidar cohérent selon l'une des revendications 6 à 8 comprenant en outre un dispositif de balayage configuré pour générer successivement une pluralité d'ensembles de direction, de manière à couvrir une pluralité de champs observés.

10. Un produit programme d'ordinateur, ledit programme d'ordinateur comprenant des instructions de code permettant d'effectuer les étapes de la méthode selon l'une quelconque des revendications 1 à 5.

**Patentansprüche**

1. Verfahren (10) zur Bildgebung, das durch einen kohärenten Lidar implementiert wird, folgende Schritte umfassend:

   - A Erzeugen eines als Lokaloszillator bezeichneten Signals mit einer Lokaloszillatorfrequenz $f_{OL}$, die periodisch moduliert ist und aus der Summe eines Mittelwerts f0 und einer periodischen Modulationsfrequenz $f_{modOL}$ besteht, wobei jede Periode P lineare Teile umfasst, die jeweils P Flanken mit Frequenzen $\alpha_{OLj}$ aufweisen, die mit j indiziert sind, wobei j von 1 bis P variiert,
   - B Erzeugen von N mit i indizierten Sendesignalen Si anhand des Lokaloszillators, wobei i von 1 bis N variiert, wobei jedes Sendesignal Si eine Sendefrequenz $f_{mod,i}$ mit P vorbestimmten Flanken mit einer Frequenz $\alpha_{i,j}$ aufweist, die mit den P Flanken der Lokaloszillatorfrequenz synchronisiert sind, und
   - C Senden jedes Sendesignals Si in eine zugehörige Richtung ($\Theta i$), wobei die Richtungen so gewählt werden, dass sie einen vorbestimmten Raumabschnitt abdecken, der dem beobachteten Feld entspricht, wobei jede Richtung einem Pixel Ai eines Bildes des Feldes entspricht,
   - D Sammeln von N Rückstreusignalen, die jeweils aus der Rückstreuung der N Sendesignale durch mindestens ein in dem Raumabschnitt vorhandenes Element stammen, wobei ein mit i indiziertes Rückstreusignal eine Signalfrequenz $f_{s,i}$ aufweist,
   - E Erkennen eines Schwebungssignals Sb, das aus der Interferenz zwischen dem Lokaloszillator und den N rückgestreuten Signalen erzeugt wird,
   - F komplexes Modulieren des Schwebungssignals Sb durch die Modulationsfrequenz des Lokaloszillators $f_{modOL}$,
   - G Durchführen von NxP komplexen Demodulationen des modulierten Schwebungssignals, wobei jede mit i, j indizierte komplexe Demodulation darin besteht, mit einer Demodulationsfrequenz $f_{demodi,j}$ zu demodulieren, die eine einzige Flanke gleich der Flanke $\alpha_{i,j}$ aufweist, um NxP demodulierte Signale $S_{demodi,j}$ zu erzielen,
   - H Bestimmen von NxP spektralen Leistungsdichten $SP_{i,j}$ der NxP demodulierten Signale $S_{demodi,j}$,
   - I Bestimmen der charakteristischen Frequenzen (vij), die lokalen Maxima der NxP spektralen Leistungsdichten entsprechen,
   - J Bestimmen, für jedes Pixel Ai, mindestens einer Geschwindigkeitsinformation (vi) und mindestens einer Abstandsinformation (di) anhand der charakteristischen Frequenzen (vij).

2. Verfahren (20) zur Bildgebung, das durch einen kohärenten Lidar implementiert wird, folgende Schritte umfassend:

   - A Erzeugen eines als Lokaloszillator bezeichneten Signals mit einer Lokaloszillatorfrequenz $f_{OL}$, die periodisch moduliert ist und aus der Summe eines Mittelwerts f0 und einer periodischen Modulationsfrequenz $f_{modOL}$ besteht, wobei jede Periode P lineare Teile umfasst, die jeweils P Flanken mit Frequenzen $\alpha_{OLj}$ aufweisen, die mit j indiziert sind, wobei j von 1 bis P variiert,
   - B Erzeugen von N mit i indizierten Sendesignalen Si anhand des Lokaloszillators, wobei i von 1 bis N variiert, wobei jedes Sendesignal Si eine Sendefrequenz $f_{mod,i}$ mit P vorbestimmten Flanken mit einer Frequenz $\alpha_{i,j}$ aufweist, die mit den P Flanken der Lokaloszillatorfrequenz synchronisiert sind, und
   - C Senden jedes Sendesignals Si in eine zugehörige Richtung ($\Theta i$), wobei die Richtungen so gewählt werden, dass sie einen vorbestimmten Raumabschnitt abdecken, der dem beobachteten Feld entspricht, wobei jede Richtung einem Pixel Ai eines Bildes des Feldes entspricht,
   - D Sammeln von N Rückstreusignalen, die jeweils aus der Rückstreuung der N Sendesignale durch mindestens ein in dem Raumabschnitt vorhandenes Element stammen, wobei ein mit i indiziertes Rückstreusignal eine Signalfrequenz $f_{s,i}$ aufweist,
   - E' Erkennen von N Schwebungssignalen an N Detektoren, wobei ein mit i indiziertes Schwebungssignal Sbi aus der Interferenz zwischen dem lokalen Oszillator und dem indizierten Rückstreusignal erzeugt wird,

- F' komplexes Modulieren des Schwebungssignals Sbi durch die Modulationsfrequenz des Lokaloszillators $f_{modOL}$,

- G' Durchführen von P komplexen Demodulationen für jedes der N mit i indizierten modulierten Schwebungssignale, wobei jede mit j indizierte komplexe Demodulation eines mit i indizierten modulierten Schwebungssignals darin besteht, mit einer Demodulationsfrequenz $f_{demodi,j}$ zu demodulieren, die eine einzige Flanke aufweist, die gleich der Flanke $\alpha_{i,j}$ ist, um P demodulierte Signale $S_{demodi,j}$ zu erzielen,

- H Bestimmen von NxP spektralen Leistungsdichten $SP_{i,j}$, indem für jedes i P spektrale Leistungsdichten der P demodulierten Signale durchgeführt werden,

- I Bestimmen, für jedes i, der charakteristischen Frequenzen ($\nu_{ij}$), die lokalen Maxima der P spektralen Leistungsdichten entsprechen,

- J Bestimmen, für jedes Pixel Ai, mindestens einer Geschwindigkeitsinformation (vi) und mindestens einer Abstandsinformation (di) anhand der charakteristischen Frequenzen ($\nu_{ij}$).

3. Bildgebungsverfahren nach einem der Ansprüche 1 oder 2, wobei die Flanken mit der Frequenz $\alpha_{i,j}$ wie folgt bestimmt werden: $\alpha_{i,j} = r_i \, \alpha_{Olj}$, wobei $r_i$ eine reelle Zahl ist.

4. Bildgebungsverfahren nach Anspruch 3, wobei die reellen Zahlen $r_i$ keine ganzzahligen Vielfachen voneinander sind.

5. Bildgebungsverfahren nach einem der vorhergehenden Ansprüche, ferner umfassend einen Abtastschritt, bei dem die Schritte A bis J nacheinander für eine Vielzahl von beobachteten Feldern durchgeführt werden.

6. Kohärenter Lidar (100) zum Durchführen von Bildgebung, Folgendes umfassend:

- eine Laserquelle (L), die zum Erzeugen eines als Lokaloszillator bezeichneten Signals mit einer Lokaloszillatorfrequenz $f_{OL}$ konfiguriert ist, die periodisch moduliert ist und aus der Summe eines Mittelwerts f0 und einer periodischen Modulationsfrequenz $f_{modOL}$ besteht, wobei jede Periode P lineare Teile umfasst, die jeweils P Flanken mit Frequenzen $\alpha_{OLj}$ aufweisen, die mit j indiziert sind, wobei j von 1 bis P variiert,

- eine Multiplexer/Modulator (MM)-Vorrichtung, die zum Erzeugen von N mit i indizierten Sendesignalen Si anhand des Lokaloszillators konfiguriert ist, wobei i von 1 bis N variiert, wobei jedes Sendesignal Si eine Sendefrequenz $f_{mod,i}$ mit P vorbestimmten Flanken mit einer Frequenz $\alpha_{i,j}$ aufweist, die mit den P Flanken der Lokaloszillatorfrequenz synchronisiert sind, und

- eine Sendevorrichtung (DE), die zum Senden jedes Sendesignals Si in eine zugehörige Richtung ($\Theta i$) konfiguriert ist, wobei die Richtungen so gewählt werden, dass sie einen vorbestimmten Raumabschnitt abdecken, der dem beobachteten Feld entspricht, wobei jede Richtung einem Pixel Ai eines Bildes des Feldes entspricht,

- eine Empfangsvorrichtung (DR), die zum Sammeln von N Rückstreusignalen konfiguriert ist, die jeweils aus der Rückstreuung der N Sendesignale durch mindestens ein in dem Raumabschnitt vorhandenes Element stammen, wobei ein mit i indiziertes Rückstreusignal eine Signalfrequenz $f_{s,i}$ aufweist,

- einen Photodetektor (D), der zum Erzeugen eines Schwebungssignals Sb konfiguriert ist, das aus der Interferenz zwischen dem Lokaloszillator und den N rückgestreuten Signalen erzeugt wird,

- eine Verarbeitungseinheit (UT), die für folgende Schritte konfiguriert ist:

❖ komplexes Modulieren des Schwebungssignals Sb durch die Modulationsfrequenz des Lokaloszillators $f_{modOL}$,

❖ Durchführen von NxP komplexen Demodulationen des modulierten Schwebungssignals, wobei jede mit i, j indizierte komplexe Demodulation darin besteht, mit einer Demodulationsfrequenz $f_{demodi,j}$ zu demodulieren, die eine einzige Flanke gleich der Flanke $\alpha_{i,j}$ aufweist, um NxP demodulierte Signale $S_{demodi,j}$ zu erzielen,

❖ Bestimmen von NxP spektralen Leistungsdichten $SP_{i,j}$ der NxP demodulierten Signale $S_{demodi,j}$,

❖ Bestimmen von charakteristischen Frequenzen ($\nu_{ij}$), die lokalen Maxima der NxP spektralen Leistungsdichten entsprechen,

❖ Bestimmen, für jedes Pixel Ai, mindestens einer Geschwindigkeitsinformation (vi) und mindestens einer Abstandsinformation (di) anhand der charakteristischen Frequenzen ($\nu_{ij}$).

7. Kohärenter Lidar (200) zum Durchführen von Bildgebung, Folgendes umfassend:

- eine Laserquelle, die zum Erzeugen eines als Lokaloszillator bezeichneten Signals mit einer Lokaloszillatorfrequenz $f_{OL}$ konfiguriert ist, die periodisch moduliert ist und aus der Summe eines Mittelwerts f0 und einer periodischen Modulationsfrequenz $f_{modOL}$ besteht, wobei jede Periode P lineare Teile umfasst, die jeweils P Flanken mit Frequenzen $\alpha_{OLj}$ aufweisen, die mit j indiziert sind, wobei j von 1 bis P variiert,

- eine Multiplexer/Modulator-, (MM-)Vorrichtung, die zum Erzeugen von N mit i indizierten Sendesignalen Si anhand des Lokaloszillators konfiguriert ist, wobei i von 1 bis N variiert, wobei jedes Sendesignal Si eine Sendefrequenz $f_{mod,i}$ mit P vorbestimmten Flanken mit einer Frequenz $\alpha_{i,j}$ aufweist, die mit den P Flanken der Lokaloszillatorfrequenz synchronisiert sind, und,

- eine Sendevorrichtung (DE), die zum Senden jedes Sendesignals Si in eine zugehörige Richtung ($\Theta i$) konfiguriert ist, wobei die Richtungen so gewählt werden, dass sie einen vorbestimmten Raumabschnitt abdecken, der dem beobachteten Feld entspricht, wobei jede Richtung einem Pixel Ai eines Bildes des Feldes entspricht,

- eine Empfangsvorrichtung (DR), die zum Sammeln von N Rückstreusignalen konfiguriert ist, die jeweils aus der Rückstreuung der N Sendesignale durch mindestens ein in dem Raumabschnitt vorhandenes Element stammen, wobei ein mit i indiziertes Rückstreusignal eine Signalfrequenz $f_{s,i}$ aufweist,

- N Photodetektoren (Di), die zum Erzeugen von jeweils N Schwebungssignalen konfiguriert sind, wobei ein mit i indiziertes Schwebungssignal Sbi aus der Interferenz zwischen dem lokalen Oszillator und dem indizierten Rückstreusignal erzeugt wird,

- eine Verarbeitungseinheit (UT), die für folgende Schritte konfiguriert ist:

❖ komplexes Modulieren des Schwebungssignals Si durch die Modulationsfrequenz des Lokaloszillators $f_{modOL}$,

❖ Durchführen von P komplexen Demodulationen für jedes der N mit i indizierten modulierten Schwebungssignale, wobei jede mit j indizierte komplexe Demodulation darin besteht, durch eine Demodulationsfrequenz $f_{demodi,j}$ zu demodulieren, die eine einzige Flanke aufweist, die gleich der Flanke $\alpha_{i,j}$ ist, um P demodulierte Signale $S_{demodi,j}$ zu erzielen,

❖ Bestimmen von NxP spektralen Leistungsdichten $Sp_{i,j}$, indem für jedes i P spektrale Leistungsdichten der P demodulierten Signale $S_{demodi,j}$ durchgeführt werden,

❖ Bestimmen, für jedes i, der charakteristischen Frequenzen ($\nu_{ij}$), die lokalen Maxima der P spektralen Leistungsdichten entsprechen,

❖ Bestimmen, für jedes Pixel Ai, mindestens einer Geschwindigkeitsinformation (vi) und mindestens einer Abstandsinformation (di) anhand der charakteristischen Frequenzen ($\nu_{ij}$).

8. Kohärenter Lidar nach einem der Ansprüche 6 oder 7, wobei die Modulator/Multiplexer-Vorrichtung (MM) eine Vielzahl von parallel angeordneten Phasen- und Quadraturmodulatoren (18) umfasst.

9. Kohärenter Lidar nach einem der Ansprüche 6 bis 8, ferner umfassend eine Abtasteinrichtung, die so konfiguriert ist, dass sie nacheinander eine Vielzahl von Richtungssätzen erzeugt, um eine Vielzahl von beobachteten Feldern abzudecken.

10. Computerprogrammprodukt, wobei das Computerprogramm Codeanweisungen umfasst, um die Schritte des Verfahrens nach einem der Ansprüche 1 bis 5 durchzuführen.

**Claims**

1. An imaging method (10) carried out by a coherent lidar, comprising the steps of:

- A generating a signal called a local oscillator which has a local oscillator frequency $f_{OL}$ which is periodically modulated and which is constituted by the total of a mean value f0 and a periodic modulation frequency $f_{modOL}$, each period comprising P linear portions which have P frequency gradients $\alpha_{OLj}$ which are indexed j, j varying from 1 to P,

- B generating, from the local oscillator, N emission signals Si which are indexed i, i varying from 1 to N, each emission signal Si having an emitted frequency $f_{mod,i}$ which has P predetermined frequency gradients $\alpha_{i,j}$ which are synchronised with the P local oscillator frequency gradients, and

- C emitting each emission signal Si in an associated direction (Θi), the directions being selected so as to cover a predetermined portion of space corresponding to the observed field, each direction corresponding to a pixel Ai of an image of the field,
- D collecting N backscattered signals which are output from the backscattering of the N emission signals, respectively, by at least one element which is present in the portion of space, a backscattered signal which is indexed i having a signal frequency $f_{s,i}$,
- E detecting a beat signal Sb which is generated from the interference between the local oscillator and the N backscattered signals,
- F modulating in a complex manner the beat signal Sb by the modulation frequency of the local oscillator $f_{modOL}$,
- G carrying out NxP complex demodulations of the modulated beat signal, each complex demodulation which is indexed i, j involving demodulating by a demodulation frequency $f_{demodi,j}$ having a unique gradient which is equal to the gradient $\alpha_{i,j}$ in order to obtain NxP demodulated signals $S_{demodi,j}$.
- H determining NxP spectral power densities $SP_{i,j}$ of the NxP demodulated signals Sdemodij,
- I determining characteristic frequencies (vij) corresponding to local maxima of the NxP spectral power densities,
- J determining, for each pixel Ai, at least one speed information item (vi) and at least one distance information item (di) from the characteristic frequencies (vij).

2. An imaging method (20) carried out by a coherent lidar, comprising the steps of:

- A generating a signal called a local oscillator which has a local oscillator frequency $f_{OL}$ which is periodically modulated and which is constituted by the total of a mean value f0 and a periodic modulation frequency $f_{modOL}$, each period comprising P linear portions which have P frequency gradients $\alpha_{OLj}$ which are indexed j, j varying from 1 to P,
- B generating, from the local oscillator, N emission signals Si which are indexed i, i varying from 1 to N, each emission signal Si having an emitted frequency $f_{mod,i}$ which has P predetermined frequency gradients $\alpha_{i,j}$ which are synchronised with the P local oscillator frequency gradients and
- C emitting each emission signal Si in an associated direction (Θi), the directions being selected so as to cover a predetermined portion of space corresponding to the observed field, each direction corresponding to a pixel Ai of an image of the field,
- D collecting N backscattered signals which are output from the backscattering of the N emission signals, respectively, by at least one element which is present in the portion of space, a backscattered signal which is indexed i having a signal frequency $f_{s,i}$,
- E' detecting N beat signals on N detectors, a beat signal Sbi which is indexed i being generated from the interference between the local oscillator and the backscattered signal indexed i,
- F' modulating in a complex manner each beat signal Sbi by the modulation frequency of the local oscillator $f_{modOL}$,
- G' carrying out, for each of the N modulated beat signals which are indexed i, P complex demodulations, each complex demodulation which is indexed j of a modulated beat signal which is indexed i involving demodulating by a demodulation frequency $f_{demodi,j}$ having a unique gradient which is equal to the gradient $\alpha_{i,j}$ in order to obtain P demodulated signals $S_{demodi,j}$,
- H determining NxP spectral power densities $SP_{i,j}$ by carrying out, for each i, P spectral power densities of the P demodulated signals,
- I determining, for each i, characteristic frequencies ($v_{ij}$) corresponding to local maxima of the P spectral power densities,
- J determining, for each pixel Ai, at least one speed information item (vi) and at least one distance information item (di) from the characteristic frequencies ($v_{ij}$).

3. The imaging method according to either claim 1 or claim 2, wherein the frequency gradients $\alpha_{i,j}$ are determined as follows: $\alpha_{i,j} = r_i . \alpha_{OLj}$, with $r_i$ being a real number.

4. The imaging method according to claim 3, wherein the real numbers $r_i$ are not whole multiples of each other.

5. The imaging method according to any one of the preceding claims, further comprising a scanning step, in which the steps A to J are successively carried out for a plurality of observed fields.

6. A coherent lidar (100) for carrying out imaging, comprising:

- a laser source (L) which is configured to generate a signal called a local oscillator which has a local oscillator frequency $f_{OL}$ which is periodically modulated and which is constituted by the total of a mean value f0 and a periodic modulation frequency $f_{modOL}$, each period comprising P linear portions which have P frequency gradients $\alpha_{OLj}$ which are indexed j, respectively, j varying from 1 to P,

- a multiplexer/modulator device (MM) which is configured to generate, from the local oscillator, N emission signals Si which are indexed i, i varying from 1 to N, each emission signal Si having an emitted frequency $f_{mod,i}$ which has P predetermined frequency gradients $\alpha_{i,j}$ which are synchronised with the P local oscillator frequency gradients and

- an emission device (DE) which is configured to emit each emission signal Si in an associated direction ($\Theta i$), the directions being selected so as to cover a predetermined portion of space corresponding to the observed field, each direction corresponding to a pixel Ai of an image of the field,

- a receiving device (DR) which is configured to collect N backscattered signals which are output from the backscattering of the N emission signals, respectively, by at least one element which is present in the portion of space, a backscattered signal which is indexed i having a signal frequency $f_{s,i}$,

- a photodetector (D) which is configured to generate a beat signal Sb which is generated from the interference between the local oscillator and the N backscattered signals,

- a processing unit (UT) which is configured to:

✦ modulate in a complex manner the beat signal Sb by the modulation frequency of the local oscillator $f_{modOL}$,
✦ carry out NxP complex demodulations of the modulated beat signal, each complex demodulation which is indexed i, j involving demodulating by a demodulation frequency $f_{demodi,j}$ having a unique gradient which is equal to the gradient $\alpha_{i,j}$ in order to obtain NxP demodulated signals $S_{demodi,j}$,
✦ determine NxP spectral power densities $SP_{i,j}$ of the NxP demodulated signals $S_{demodi,j}$
✦ determine characteristic frequencies ($\nu_{ij}$) corresponding to local maxima of the NxP spectral power densities,
✦ determine, for each pixel Ai, at least one speed information item (vi) and at least one distance information item (di) from the characteristic frequencies ($\nu_{ij}$).

7. A coherent lidar (200) for carrying out imaging, comprising:

- a laser source (L) which is configured to generate a signal called a local oscillator which has a local oscillator frequency $f_{OL}$ which is periodically modulated and which is constituted by the total of a mean value f0 and a periodic modulation frequency $f_{modOL}$, each period comprising P linear portions which have P frequency gradients $\alpha_{OLj}$ which are indexed j, respectively, j varying from 1 to P,

- a multiplexer/modulator device (MM) which is configured to generate, from the local oscillator, N emission signals Si which are indexed i, i varying from 1 to N, each emission signal Si having an emitted frequency $f_{mod,i}$ which has P predetermined frequency gradients $\alpha_{i,j}$ which are synchronised with the P local oscillator frequency gradients and

- an emission device (DE) which is configured to emit each emission signal Si in an associated direction ($\Theta i$), the directions being selected so as to cover a predetermined portion of space corresponding to the observed field, each direction corresponding to a pixel Ai of an image of the field,

- a receiving device (DR) which is configured to collect N backscattered signals which are output from the backscattering of the N emission signals, respectively, by at least one element which is present in the portion of space, a backscattered signal which is indexed i having a signal frequency $f_{s,i}$,

- N photodetectors (Di) which are configured to generate N beat signals, respectively, each beat signal Sbi which is indexed i being generated from the interference between the local oscillator and the backscattered signal indexed i,

- a processing unit (UT) which is configured to:

✦ modulate in a complex manner each beat signal Si by the modulation frequency of the local oscillator $f_{modOL}$,
✦ carry out, for each of the N modulated beat signals which are indexed i, P complex demodulations, each complex demodulation which is indexed j involving demodulating by a demodulation frequency $f_{demodi,j}$ having a unique gradient which is equal to the gradient $\alpha_{i,j}$ in order to obtain P demodulated signals $S_{demodi,j}$,
✦ determine NxP spectral power densities $SP_{i,j}$ by carrying out, for each i, P spectral power densities of the P demodulated signals $S_{demodi,j}$
✦ determine, for each i, characteristic frequencies ($\nu_{ij}$) corresponding to local maxima of the P spectral power densities,
✦ determine, for each pixel Ai, at least one speed information item (vi) and at least one distance information item (di) from the characteristic frequencies ($\nu_{ij}$).

8. The coherent lidar according to any one of claim 6 or claim 7, wherein the modulator/multiplexer device (MM) comprises a plurality of phase and quadrature modulators (18) which are arranged in a parallel manner.

9. The coherent lidar according to any one of claims 6 to 8, further comprising a scanning device which is configured to successively generate a plurality of direction sets, so as to cover a plurality of fields which are observed.

10. A computer programme product, the computer programme comprising code instructions which allow the steps of the method according to any one of claims 1 to 5 to be carried out.

FIG.1

FIG.2

FIG.3a

FIG.3b

FIG.3

FIG.4a

FIG.4b

FIG.4c

FIG.4d

FIG.4e

FIG.4f

FIG.4g

FIG.4

FIG.5a

FIG.5b

10

Générer $S_{OL}$ : $f_{OL}(t) = f_0 + f_{modOL}(t)$

$\alpha_{OL1}$   $\alpha_{OL2}$

$T_{FO}$

$f_{modOL}$ : $\alpha_{OLj}$   j de 1 à P

A

Générer N signaux $S_i$ i de 1 à N

$S_i$ : de fréquence $f_{mod,i}(t)$ : P pentes $\alpha_{i,j}$

B

Emettre $S_i$ à $\theta_i$ / $A_i$

C

Collecter N signaux rétrodiffusés : $f_{s,i}(t)$

D

Détecter $S_b = \Sigma S_{bi}$

$S_{bi}$ : $f_{s,i}(t) - f_{OL}(t)$

E

Moduler $S_b$ par $f_{modOL}$

F

Réaliser N x P démodulations de $S_b$ modulé

par $f_{modOL}$ à $f_{demodi,j}$ pente $\alpha_{i,j}$

$\rightarrow S_{demodi,j}$

G

Déterminer N x P densités spectrales $SP_{i,j}$

H

Déterminer des fréquences caractéristiques $\nu_{i,j}$

I

Pour chaque $A_i$ déterminer $(d_i, v_i)$ à partir de $\nu_{i,j}$

J

FIG.6

FIG.6bis

FIG.7

FIG.8a

FIG.8b

FIG.8

FIG.9

EP 4 004 597 B1

FIG.10

FIG.11

FIG.12

FIG.13

FIG.14

FIG.15

EP 4 004 597 B1

20

Générer Sol : $f_{OL}(t) = fo + f_{modOL}(t)$

$\alpha_{OLj}$

$T_{FO}$

$f_{modOL}$ : $\alpha_{OLj}$    j de 1 à P

A

Générer N signaux $S_i$ ide 1 à N

$S_i$ : de fréquence $f_{mod,i}(t)$ : P pentes $\alpha_{ij}$

B

Emettre $S_i$ à $\theta_i$ / $A_i$

C

Collecter N signaux rétrodiffusés : $f_{s,i}(t)$

D

Détecter N signaux de battement $Sb_i$
sur N détecteurs $D_i$
$Sb_i$ : $f_{s,i}(t) - f_{OL}(t)$

E'

Moduler chaque $Sb_i$ par $f_{modOL}$

F'

Pour chaque $Sb_i$ modulé par $f_{modOL}$
Réaliser P démodulations à $f_{demodi,j}$ : pente $\alpha_{i,j}$
$\rightarrow S_{demodi,j}$

G'

Pour chaque i déterminer
P densités spectrales $SP_{i,j}$

H

Pour chaque i déterminer
des fréquences caractéristiques $\nu_{i,j}$

I

Pour chaque pixel $A_i$ déterminer ($d_i$, $v_i$) à partir de $\nu_{i,j}$

J

FIG.16

FIG.17

FIG.18

$\phi_1 = A \cos(\Omega_1 t)$
$\psi_1 = B \sin(\Omega_1 t)$

$\phi_2 = A \cos(\Omega_2 t)$
$\psi_2 = B \sin(\Omega_2 t)$

$\phi_N = A \cos(\Omega_N t)$
$\psi_N = B \sin(\Omega_N t)$

FIG.19

FIG.20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019025431 A1
- WO 2018036946 A
- FR 1500603
- WO 2016150783 A

**Littérature non-brevet citée dans la description**

- **FARZIN AMZAJERDIAN et al.** International Symposium on Photoelectronic Détection and Imaging 2011: Laser Sensing and Imaging; and Biological and Medical Applications of Photonics Sensing and Imaging. *Proc. SPIE,* 19 Août 2011, vol. 8192, 819202
- **HULME et al.** Fully integrated hybrid silicon free-space beam steering source with 32 channel phased array. *Proc. SPIE,* 2014, vol. 8989, 898907-1
- **LAUERMANN et al.** *OPTICS EXPRESS,* 2016, vol. 14